# EUROPÄISCHE PATENTSCHRIFT

(11) **EP 3 557 094 B1**
(45) Veröffentlichungstag und Bekanntmachung des Hinweises auf die Patenterteilung: **23.06.2021**
(21) Anmeldenummer: 19000236.0
(22) Anmeldetag: 27.07.2017
(51) Int. Cl.: F16G 15/04

(54) **KETTEN-VERSCHLUSSGLIED**
CHAIN LOCKING LINK
MAILLON DE FERMETURE À CHAÎNES

(30) Priorität: 01.08.2016 DE 202016004662 U; 12.07.2017 DE 102017006618
(43) Veröffentlichungstag der Anmeldung: 23.10.2019
(62) Teilanmeldung aus: 17001296.7
(73) Patentinhaber: SRAM Deutschland GmbH, 97424 Schweinfurt (DE)
(72) Erfinder: da Silva Ribeiro, Bruno Miguel Ferreira, 3700-454 Arrifara, Aveiro (PT); Nunes dos Santos, Pedro Miguel, 3040-87 Coimbra (PT)

(56) Entgegenhaltungen:
- CN-A- 105 782 348
- DE-A1-102015 003 057
- US-A1- 2011 081 195

## Beschreibung

Die vorliegende Erfindung betrifft ein Ketten-Verschlussglied für eine Antriebskette, die mit einem Mehrfachritzel mit großer Ganganzahl an einem Fahrradhinterrad zusammenwirkt.

Antriebsketten für Fahrräder mit Kettenschaltung setzen sich aus zueinander schwenkbar angeordneten Kettengliedern zusammen, mit deren Hilfe eine geschlossene Kettenschleife zur Antriebskraftübertragung ausgebildet wird. Diese Kettenglieder sind um Kettenbolzen relativ zueinander drehbar, wobei die Kettenbolzen von Lochungen aufgenommen werden, die sich in den zwei Endbereichen jeder Kettenlasche befinden. Die zwei Endbereiche jeder Kettenlasche sind durch einen Verbindungsbereich mit meistens tailliert ausgebildeter Außenkontur miteinander verbunden. Die Kettenglieder bestehen entweder aus einem Paar Innenlaschen oder einem Paar Außenlaschen. Die Außenlaschen- und Innenlaschenpaare sind in alternierender Weise mittels der Kettenbolzen miteinander verbunden. Aufgrund dieser Anordnung ist der Abstand zwischen einem Außenlaschenpaar etwas größer, als der zwischen einem Innenlaschenpaar.

Die Enden der Kettenschleife werden mittels eines Ketten-Verschlussglieds miteinander verbunden. Das Verschlussglied kann entweder wiederverschließbar oder nur einmal zu gebrauchen sein. Das Verschlussglied wird von einem Außenlaschenpaar gebildet, das sich allerdings durch einige Merkmale von den üblichen Außenlaschenpaaren unterscheidet.

Aus dem Stand der Technik sind verschiedene Ansätze bekannt, die die ungewollte Demontage des Verschlussgliedes verhindern sollen.

So stellt die DE 10 2006 005 157 ein Ketten-Verschlussglied bereit, das zwei Verschlussplatten mit Montageöffnungen (Langlöcher) und zwei Bolzen aufweist. Zur Montage werden die Bolzen in den großen Enddurchmesser der Montageöffnungen eingeführt. Anschließend müssen die beiden Bolzen jeweils im Bereich des Bolzenkopfes und im Bereich der Bolzennut eine Engstelle im Verschiebebereich der Montageöffnung überwinden, bevor sie in den kleinen Enddurchmesser des Langloches einrasten. In seiner Endstellung wird der Bolzen entlang seiner Bolzennut bzw. seines Bolzenhalses in dem kleinen Enddurchmesser der Montageöffnung aufgenommen. Der Durchmesser des kleinen Enddurchmessers der Montageöffnung entspricht somit zumindest dem Durchmesser des Bolzenhalses. Um ein gewolltes Öffnen des Ketten-Verschlussgliedes zu erleichtern, erlaubt der Übergang vom kleinen Enddurchmesser hin zur Engstelle in der Montageöffnung einen klemmfreien Bewegungsanlauf des Kettenbolzens in Öffnungsrichtung. Dieser klemmfreie Bereich erzeugt allerdings ein geringes Spiel zwischen Bolzen und kleinem Enddurchmesser, welches wiederum zu einer ungewollten Demontage unter starker Belastung der Kette führen kann.

Des Weiteren offenbart die US2011/081195A1 ein Ketten-Verschlussglied gemäß dem Oberbegriff der Ansprüche 1 und 9.

Daher stellt sich die Aufgabe, ein Ketten-Verschlussgliedes bereitzustellen, das auch bei starker Belastung, beispielsweise bei starker Vibration oder Schlägen im unebenen Terrain, eine ungewollte Demontage des Ketten-Verschlussgliedes verhindert.

Die vorliegende Erfindung löst diese Aufgabe mit einem Ketten-Verschlussglied nach dem Hauptanspruch, bestehend aus zwei Verschlussteilen mit jeweils einer Verschlussplatte und einem mit der Verschlussplatte drehfest verbundenen Kettenbolzen. Die Verschlussplatte weist einen ersten Endbereich, einen zweiten Endbereich und einen Verbindungsbereich zwischen den beiden Endbereichen auf. Ferner ist ein Langloch, umfassend eine Einführöffnung, eine Halteöffnung und einen zwischen der Einführöffnung und der Halteöffnung liegenden Verschiebebereich, in dem ersten Endbereich der Verschlussplatte angeordnet. Der Verschiebebereich verengt sich von der Einführöffnung hin zur Halteöffnung und bildet eine Hals-Engstelle. Der Kettenbolzen weist an einem Ende einen Bolzenkopf mit einem Bolzenhals und an dem anderen Ende einen Bolzenfuß auf. Ein Durchmesser D21 der Einführöffnung ist größer, als ein Durchmesser D41 des Bolzenkopfes 41. Ein Durchmesser D22 der Halteöffnung ist kleiner als der Durchmesser D41 des Bolzenkopfes, sowie größer als, oder zumindest genauso groß wie ein Durchmesser D42 des Bolzenhalses. Die Hals-Engstelle ist kleiner bemessen als der Durchmesser D42 des Bolzenhalses. Zwischen der Hals-Engstelle und der Halteöffnung des Langlochs ist ein Klemmbereich angeordnet, der kleiner bemessen ist, als der Durchmesser D42 des Bolzenhalses.

Dies hat den Effekt, dass der Bolzen, wenn er die Engstelle im Verschiebebereich des Langlochs überwunden hat, mittels des Klemmbereichs in der Halteöffnung klemmend gehalten wird. Der Klemmbereich stellt eine weitere Demontagesicherung dar. Im Stand der Technik beschrieb die Halteöffnung bis zur Engstelle einen Kreisbogen mit einem Durchmesser, der etwas größer bemessen war als der Bolzenhalsdurchmesser. Der erfindungsgemäße Klemmbereich ist nunmehr zwischen dem Kreisbogen der Halteöffnung und der Engstelle angeordnet und erlaubt die spielfreie Klemmung des Bolzens gegen den Rand der Halteöffnung bzw. den Rand der Absenkung. Die Klemmung erfolgt in radialer Richtung auf den Bolzen, also quer zur Bolzenlängsachse des Bolzens B. Der Klemmbereich ist in der unteren Hälfte des Verschiebebereichs angeordnet.

Insbesondere ist die Verschlussplatte entlang ihrer Längsachse V asymmetrisch ausgebildet und der Verbindungsbereich der Verschlussplatte weist einen konkaven Randbereich und einen nicht-konkaven Randbereich auf, wobei der nicht-konkave Randbereich als gerader Randbereich ausgebildet ist.

Ein positiver Effekt dieser asymmetrischen Ausbildung liegt darin, dass sich die Querschnittsfläche der Verschlussplatte vergrößert. Die Querschnittsfläche entspricht dabei der Fläche, die sichtbar wird, wenn die Verschlussplatte mittig entlang ihrer Querachse (senkrecht zu ihrer Längsachse V) geschnitten wird. Herkömmliche Verschlussplatten von Ketten-Verschlussgliedern weisen in der Regel, genau wie die übrigen Außenlaschen und Innenlaschen, einen symmetrischen und damit beidseitig, konkaven Verbindungsbereich auf (Vergleiche Abbildung des Stands der Technik).

Der Querschnitt einer auf beiden Seiten konkav ausgebildeten Verschlussplatte weist damit eine geringere Fläche auf, als eine Verschlussplatte mit einem weniger konkaven oder nicht konkaven Randbereich. Je weniger konkav der Randbereich ist, desto größer ist die Querschnittsfläche. Ein gerade ausgebildeter Randbereich weist einen größeren Querschnitt auf als ein konkav ausgebildeter, aber weniger als ein konvex ausgebildeter.

Gerade bei schmal ausgeführten Ketten mit dünnen Verschlussplatten, wie sie bei hohen Gangzahlen nötig sind, ist es notwendig, eine ausreichend große Querschnittsfläche mit genügend Material bereitzustellen, um ausreichende Stabilität der Verschlussplatten zu gewährleisten.

Der gerade Randbereich stellt einen guten Kompromiss zwischen Stabilität und Abrollfähigkeit des Verschlussgliedes dar. Einerseits erhöhen sich die Stabilität und der Bruchwiderstand der Verschlussplatte aufgrund der im Vergleich zu einem konkaven Randbereich vergrößerten Querschnittsfläche der Verschlussplatte, andererseits verbessert sich das Abrollverhalten des Verschlussgliedes am oberen Kettenführungsröllchen gegenüber der Ausführung mit konvexem Randbereich.

In einem Ausführungsbeispiel wird der Klemmbereich von zwei sich gegenüberliegenden Klemmschrägen gebildet. Die beiden Klemmschrägen verlaufen zueinander nicht-parallel. Vielmehr laufen die beiden Klemmschrägen in Richtung der Halteöffnung (also in Montagerichtung) voneinander weg, so dass sich deren Abstand zueinander vergrößert. Dies hat den Effekt, dass der Bolzen in Richtung der Halteöffnung gedrückt wird. Der Abstand zwischen den beiden Klemmschrägen ist dabei so bemessen, dass der Abstand auch an der weitesten Stelle A2 noch kleiner ist, als der Durchmesser D42 des Bolzenhalses. Der Klemmbereich bzw. die Klemmschrägen sind in der unteren Hälfte des Verschiebebereichs angeordnet. Der Klemmbereich bzw. die Klemmschrägen wirken mit dem Bolzenhals zusammen.

Ebenfalls denkbar wäre es, den Klemmbereich bzw. die gegenüberliegenden Klemmschrägen in der oberen Hälfte des Verschiebebereichs anzuordnen. Der Klemmbereich würde dann mit dem Bolzenkopf zusammenwirken. Der Abstand zwischen den Klemmschrägen wäre dann so bemessen, dass dieser auch an der weitesten Stelle noch kleiner wäre, als der Durchmesser des Bolzenkopfes. Der Bolzenkopf läge in seiner Endposition an beiden Klemmschrägen, als auch am Rand der Absenkung an. Damit würde der Bolzen ebenfalls in seiner Endposition spielfrei in der Verschlussplatte gehalten bzw. geklemmt.

Eine Kombination von Klemmbereichen in Höhe des Bolzenhalses und in Höhe des Bolzenkopfes wäre ebenfalls denkbar.

In einem Ausführungsbeispiel weist das Langloch in seinem Verschiebebereich eine Rampe auf. Der Bolzenkopf gleitet mit seiner Unterseite bei der Montage des Ketten-Verschlussgliedes entlang der Rampe, wobei die Rampe entlang des Verschiebebereichs, in Richtung der Halteöffnung ansteigt. Die Rampe stellt eine zusätzliche Demontagesicherung dar. Der Bolzenkopf muss die Steigung der Rampe und damit deren Klemmwirkung in axialer Richtung des Bolzens überwinden, bevor er seine Endposition erreicht.

In einem Ausführungsbeispiel verengt sich der Verschiebebereich des Langlochs von der Einführöffnung hin zur Halteöffnung an einer weiteren Stelle, so dass sich neben der Hals-Engstelle auch eine Kopf-Engstelle bildet. Die Kopf-Engstelle ist dabei kleiner bemessen, als der Durchmesser des Bolzenkopfes. Die zusätzliche Kopf-Engstelle stellt eine weitere Demontagesicherung für das Verschlussglied dar.

In einem Ausführungsbeispiel verläuft eine Langloch-Längsachse L des Langlochs schräg zur Verschlussplatten-Längsachse V.

Insbesondere verläuft die Langloch-Längsachse L in einem Winkelbereich von 5 Grad bis 25 Grad, vorzugsweise von 15 Grad, zur Verschlussplatten-Längsachse V.

Diese Schrägstellung des Langlochs gegenüber der Verschlussplatten-Längsachse V stellt sicher, dass um das Langloch herum genügend Material, also genügend Abstand zu den Rändern der Verschlussplatte besteht. Damit bleibt die Stabilität der Verschlussplatte erhalten.

In einem Ausführungsbeispiel weist der Verbindungsbereich der Verschlussplatte eine Aussparung auf. Die Aussparung erlaubt eine besonders schmale Kettenbauweise, weil die Verschlussplatten sehr nah zusammengebracht werden können und dennoch genügend Platz für den Eingriff der Zähne bleibt.

Die Aussparung kann durch Prägen oder Fräsen hergestellt werden. Vorzugsweise bleibt die Außenseite der Verschlussplatte dabei flach. So wird verhindert, dass die Außenseite der Verschlussplatte beim Wechsel von einem Zahnrad aufs nächste ungewollt mit Zähnen oder anderen Bauteilen kollidiert.

Dies ist eine besonders dünne Ausführungsform der Verschlussplatte, was umso mehr nach einer vergrößerten Querschnittsfläche und damit einem nicht-konkaven Randbereich verlangt. Es ist aber auch denkbar, dass durch das Prägen Material auf die Außenseite gedrückt wird, was zu einer nicht-flachen Außenseite führt.

In einer Ausführungsform ist die Aussparung in Richtung der Längsachse der Verschlussplatte gesehen im Bereich des geraden Randbereichs geringer bemessen, als im Bereich des konkaven Randbereichs. Dies hat den Effekt, dass die Querschnittsfläche der Verschlussplatte aufgrund der verkleinerten Aussparung weiter erhöht wird, was wiederum die Stabilität der Verschlussplatte erhöht.

Insbesondere weisen die relativ zur Querachse der Verschlussplatte symmetrisch verlaufenden Konturen der Aussparung vom konkaven Randbereich hin zur mittig gelegenen Verschlussplatten-Längsachse einen gebogenen, sich verjüngenden Verlauf auf. Von der Verschlussplatten-Längsachse zum geraden Randbereich hin verlaufen die Konturen im Wesentlichen geradlinig, also parallel zur Querachse der Verschlussplatte. Somit ist die Aussparung in Richtung der Verschlussplatten-Längsachse gesehen im Bereich des geraden Randbereichs und im Bereich nahe der Verschlussplatten-Längsachse geringer bemessen, als im Bereich des konkaven Randbereichs.

Bei der Weiterentwicklung von Kettenschaltsystemen für Fahrräder hat sich die Anzahl der Ritzel am Mehrfachritzel schrittweise immer weiter erhöht. Damit einhergegangen sind Veränderungen der Abmessungen von Ritzeln, Kettenlaschen, Kettenbolzen und Kettenrollen, vor allem der Abmessungen in der Richtung parallel zur Längsachse der Kettenbolzen in axialer Richtung. Damit wird die Kette an die in einem immer geringeren axialen Abstand zueinander an der Hinterradnabe platzierten hinteren Ritzel angepasst. Dabei ist klar, dass die in axialer Richtung über die Außenseite der Kette vorstehenden Bestandteile der Kette auch hinderlich sind, weil sie ungewollt und störend in Kontakt mit Bestandteilen des benachbarten Ritzels geraten können. Eine Reduzierung der Abmessungen der Bestandteile der Kette, verlangt auch eine Anpassung des Verschlussgliedes an eine besonders schmale Kette.

Eine weitere Aufgabe der Erfindung liegt somit darin, ein Verschlussglied bereitzustellen, dass sowohl eine schmale Bauweise mit wenig Abstand zwischen den Verschlussplatten und ein sicheres Eingreifen der Zähne zwischen die Verschlussplatten erlaubt, als auch genügend Stabilität und Demontagesicherheit bietet.

Aus dem Stand der Technik sind bereits gebogene bzw. bananenförmige Verschlussglieder bekannt, beispielsweise aus der US 7,712,298 und der US 7,914,410. Nachteilig bei diesen gebogenen Verschlussgliedern ist jedoch, dass sie keine enge Bauweise zulassen. Ein weiterer Nachteil bei den bekannten Verschlussgliedern aus dem Stand der Technik ist, dass keine ausreichende Demontagesicherheit bei starker Belastung besteht. Beide Dokumente offenbaren lediglich eine Demontagesicherung in Form einer durch zwei Vorsprünge gebildeten Engstelle im Verschiebebereich des Langlochs, die mit dem Bolzenhals zusammenwirkt. Bei der Montage schnappt der Bolzenhals hinter diesen Vorsprung. Die vorliegende Erfindung löst diese Aufgabe mit einem Ketten-Verschlussglied nach dem Nebenanspruch, bestehend aus zwei Verschlussteilen mit jeweils einer Verschlussplatte und einem mit der Verschlussplatte drehfest verbundenen Kettenbolzen, wobei die Verschlussplatte einen ersten Endbereich, einen zweiten Endbereich und einen Verbindungsbereich zwischen den beiden Endbereichen aufweist und der Verbindungsbereich der Verschlussplatte einen konkaven Randbereich und einen nicht-konkaven Randbereich aufweist. Ferner ist ein Langloch, umfassend eine Einführöffnung, eine Halteöffnung und einen zwischen der Einführöffnung und der Halteöffnung liegenden Verschiebebereich in dem ersten Endbereich der Verschlussplatte angeordnet, wobei sich der Verschiebebereich von der Einführöffnung hin zur Halteöffnung verengt und eine Kopf-Engstelle und/oder Hals-Engstelle bildet und wobei der Kettenbolzen an einem Ende einen Bolzenkopf mit einem Bolzenhals und an dem anderen Ende einen Bolzenfuß aufweist, wobei ein Durchmesser D21 der Einführöffnung größer ist, als ein Durchmesser D41 des Bolzenkopfes, und ein Durchmesser D22 der Halteöffnung kleiner ist, als der Durchmesser D41 des Bolzenkopfes sowie größer als ein Durchmesser D42 des Bolzenhalses. Die Kopf-Engstelle ist kleiner bemessen, als der Durchmesser D41 des Bolzenkopfes, und/oder die Hals-Engstelle ist kleiner bemessen, als der Durchmesser D42 des Bolzenhalses, wobei der Verbindungsbereich der Verschlussplatte eine Aussparung aufweist und der nicht-konkave Randbereich insbesondere als gerader Randbereich ausgebildet ist.

Die Aussparung im Verbindungsbereich führt zu einer Absenkung gegenüber dem ersten und zweiten Endbereich der Verschlussplatte. Die Absenkung schafft damit auch bei einer engen Kettenbauweise genügend Platz, um die Zähne der Kettenblätter bzw. Ritzel eingreifen zu lassen. Dies ist besonders bei Antrieben mit nur einem Kettenblatt und einer erhöhten Anzahl von etwa 12 Ritzeln notwendig. Insbesondere weisen solche Antriebe häufig alternierende dicke und dünne Zähne am vorderen Kettenrad und/oder den hinteren Ritzeln auf. In diesem Fall schafft die Aussparung genügend Platz, damit auch ein solcher dicker Zahn in den Zwischenraum des Verschlussgliedes eingreifen kann.

Der gerade Randbereich stellt einen guten Kompromiss zwischen Stabilität und Abrollfähigkeit des Verschlussgliedes dar. Einerseits erhöhen sich die Stabilität und der Bruchwiderstand der Verschlussplatte aufgrund der im Vergleich zu einem konkaven Randbereich vergrößerten Querschnittsfläche der Verschlussplatte; andererseits verbessert sich das Abrollverhalten des Verschlussgliedes am oberen Kettenführungsröllchen gegenüber der Ausführung mit konvexem Randbereich.

In einer Ausführungsform ist die Aussparung in Richtung der Längsachse der Verschlussplatte gesehen im Bereich des geraden Randbereichs geringer bemessen, als im Bereich des konkaven Randbereichs. Dies hat den Effekt, dass die Querschnittsfläche der Verschlussplatte aufgrund der verkleinerten Aussparung weiter erhöht wird, was wiederum die Stabilität der Verschlussplatte erhöht.

Insbesondere weisen die relativ zur Querachse der Verschlussplatte symmetrisch verlaufenden Konturen der Aussparung vom konkaven Randbereich hin zur mittig gelegenen Verschlussplatten-Längsachse einen gebogenen, sich verjüngenden Verlauf auf. Von der Verschlussplatten-Längsachse zum geraden Randbereich hin verlaufen die Konturen im Wesentlichen geradlinig, also parallel zur Querachse der Verschlussplatte. Somit ist die Aussparung in Richtung der Verschlussplatten-Längsachse gesehen im Bereich des geraden Randbereichs und im Bereich nahe der Verschlussplatten-Längsachse geringer bemessen, als im Bereich des konkaven Randbereichs.

Gleichzeitig gewährt die Demontagesicherung in Form einer Kopf-Engstelle und/oder Hals-Engstelle erhöhte Demontagesicherheit.

In einer Ausführungsform ist zwischen der Kopf-Engstelle und der Halteöffnung des Langlochs ein Klemmbereich angeordnet, der kleiner bemessen ist, als der Durchmesser D41 des Bolzenkopfes. Alternativ oder zusätzlich zu dem Klemmbereich ist ein weiterer Klemmbereich zwischen der Hals-Engstelle und der Halteöffnung des Langlochs angeordnet, der kleiner bemessen ist, als der Durchmesser D42 des Bolzenhalses.

Der Klemmbereich stellt eine weitere Demontagesicherung dar. Weiter hat es den Effekt, dass der Bolzen, wenn er die Engstelle im Verschiebebereich des Langlochs überwunden hat, mittels des Klemmbereichs in der Halteöffnung klemmend und spielfrei gehalten wird. Der Klemmbereich kann dabei in Höhe des Bolzenhalses (in der unteren Hälfte des Verschiebebereichs) und/oder des Bolzenkopfes (in der oberen Hälfte des Verschiebeberichs) angeordnet werden.

In den von dem Nebenanspruch abhängigen Ansprüchen sind weitere Merkmale beschrieben, deren Effekte die gleichen sind, wie die bereits in Zusammenhang mit den vom Hauptanspruch abhängigen Ansprüchen beschrieben wurden.

Die vorliegende Erfindung wird mit Bezug auf die beigefügten Zeichnungen detailliert beschrieben, wobei die Ausführungsbeispiele lediglich als nicht-beschränkende Beispiele für das erfindungsgemäße Ketten-Verschlussglied anzusehen sind.
- Fig. 1: zeigt den Stand der Technik
- Fig. 1a: zeigt eine perspektivische Ansicht des erfindungsgemäßen Ketten-Verschlussgliedes im nicht montieren Zustand
- Fig. 1b: zeigt eine Seitenansicht des Ketten-Verschlussgliedes aus Fig. 1a
- Fig. 2: zeigt den ersten Montageschritt
- Fig. 3: zeigt den zweiten Montageschritt
- Fig. 4a: zeigt den dritten Montageschritt - Endposition in einer Draufsicht
- Fig. 4b: zeigt eine Schnittansicht der Fig. 4a entlang der Schnittlinie 4b-4b
- Fig. 4c: zeigt eine Seitenansicht der Fig. 4a
- Fig. 4d: zeigt eine Schnittansicht der Fig. 4c entlang der Schnittlinie 4d-4d
- Fig. 5a, b: zeigen eine Detailansicht des Langlochs in der Draufsicht
- Fig. 6: zeigt eine Detailansicht des Langlochs in der geschnittenen Perspektive
- Fig. 7a: zeigt eine erste Ausführungsform der Verschlussplatte in der Draufsicht
- Fig. 7b: zeigt Fig. 7a in einer Seitenansicht
- Fig. 7c: zeigt Fig. 7a in der Unteransicht
- Fig. 8a: zeigt eine zweite Ausführungsform der Verschlussplatte in der Draufsicht
- Fig. 8b: zeigt Fig. 8a in einer Seitenansicht
- Fig. 8c: zeigt Fig. 8a in der Unteransicht
- Fig. 8d: zeigt Fig. 8a in der Perspektive
- Fig. 9a: zeigt eine dritte Ausführungsform der Verschlussplatte in der Draufsicht
- Fig. 9b: zeigt Fig. 9a in der Unteransicht
- Fig. 10a: zeigt eine vierte Ausführungsform der Verschlussplatte in der Draufsicht
- Fig. 10b: zeigt Fig. 10a in einer Seitenansicht
- Fig. 10c: zeigt Fig. 10c in der Unteransicht
- Fig. 10d: zeigt eine Detailansicht des Langlochs aus Fig. 10a
- Fig. 10e: zeigt eine perspektivische Draufsicht der vierten Ausführungsform
- Fig. 10f: zeigt eine perspektivische Unteransicht der vierten Ausführungsform
- Fig. 11: zeigt eine fünfte Ausführungsform der Verschlussplatte in der Draufsicht

Die Begriffe "oben" und "unten" beziehen sich unter anderem auf die Richtung der Bolzenlängsachse B, wobei der Bolzenkopf 41 weiter oben als der Bolzenhals 42, und der Bolzenfuß 43 weiter unten als der Bolzenhals 42 angeordnet ist. Die Begriffe "innen" und "außen" beziehen sich auf die Seiten der Verschlussplatten. Die Innenflächen der Verschlussplatten sind sich im montierten Zustand des Verschlussgliedes zugewandt. Die Außenflächen der Verschlussplatten sind im montierten Zustand des Verschlussgliedes voneinander abgewandt. Die Begriffe werden gleichermaßen im Zusammenhang mit den Bolzen und den Verschlussplatten genutzt.

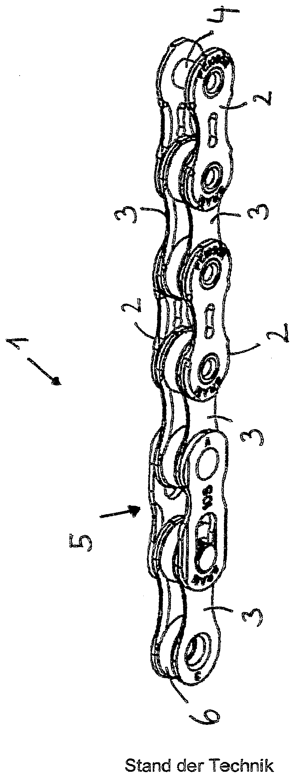

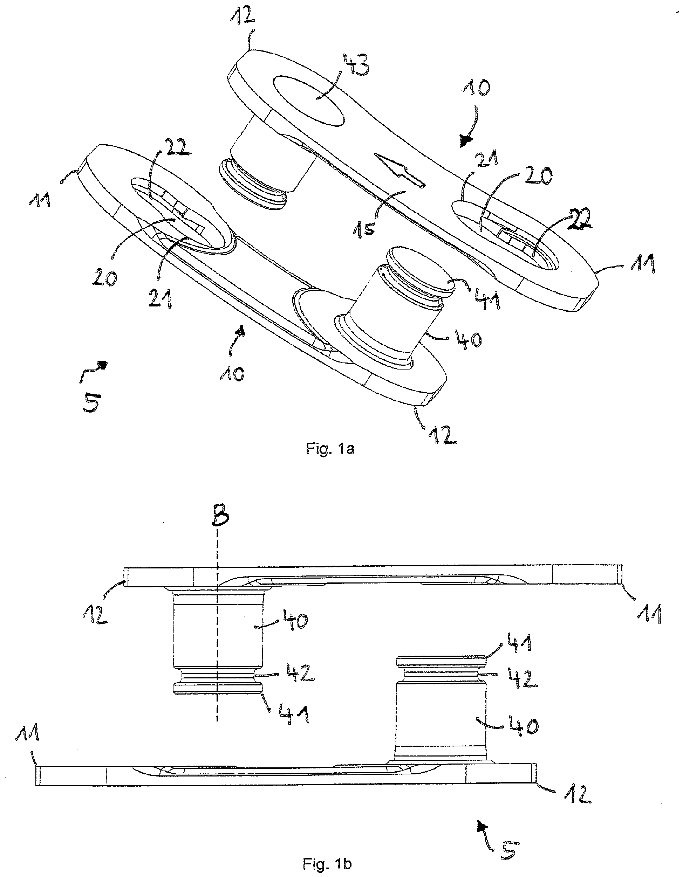

Zum besseren Verständnis der Erfindung zeigt die erste Abbildung in Figur 1 einen Abschnitt einer aus dem Stand der Technik bekannten Fahrradkette 1 mit einem herkömmlichen Verschlussglied 5. Die Kette 1 besteht aus sich abwechselnden Paaren von Außenlaschen 2 und Innenlaschen 3. Die Laschenpaare werden mittels Kettenniete 4 gelenkig verbunden. Jedem Kettenniet 4 ist eine Kettenrolle 6 zugeordnet.

In den Figuren 1a bis 4d sind die Montageschritte des Ketten-Verschlussgliedes 5 dargestellt. Zur Montage werden die beiden Verschlussteile des Verschlussgliedes zunächst zueinander orientiert, dann ineinander eingeführt und gegeneinander verschoben. Die Verschiebebewegung findet sowohl in Richtung der Längsachse der Verschlussplatten V bzw. des Langlochs L, als auch in Richtung der Bolzen-Längsachse B statt. Schließlich rasten die Verschlussteile in ihrer Endposition ein und fixieren sich gegeneinander.

Figur 1a und Figur 1b zeigen das erfindungsgemäße Ketten-Verschlussglied 5 im nicht-montierten Zustand. Die beiden identischen Verschlussteile, jeweils bestehend aus einer Verschlussplatte 10 und einem Kettenbolzen 40, sind um 180 Grad zueinander verdreht und für die Montage ausgerichtet. Die Figur 1a zeigt eine perspektivische Ansicht des Ketten-Verschlussgliedes 5. Die Innenseiten der beiden Verschlussplatten 10 sind sich zugewandt. Die Verschlussplatten 10 weisen jeweils einen ersten Endbereich 11 mit einem Langloch 20 und einen zweiten Endbereich 12 mit einer Bolzenbohrung 16 auf. Der im zwischen den beiden Endbereichen 11, 12 der Verschlussplatte 10 liegende Verbindungsbereich 15 eingeprägte Pfeil zeigt die Kettenlaufrichtung und damit die Montageorientierung des Verschlussgliedes 10 an. Die Bolzen 40 sind mit ihrem einen Ende, dem Bolzenfuß 43, jeweils drehfest in der Bolzenbohrung 16 vormontiert, insbesondere vernietet. Am anderen Ende des Bolzens 40 liegt der Bolzenkopf 41. Figur 1b zeigt eine Seitenansicht des Ketten-Verschlussgliedes 5 aus der Figur 1a. Der Bolzen 40 erstreckt sich entlang seiner Bolzen-Längsachse B. Der Bolzen 40 verjüngt sich am Bolzenhals 42 gegenüber dem Bolzenkörper und Bolzenkopf 41. Der Bolzenkopf 41 weist einen Durchmesser D41 auf, der kleiner bemessen ist, als der Durchmesser D21,der Einführöffnung 21 des Langlochs 20. Somit kann jeweils der Bolzenkopf 41 des einen Verschlussteils in die Einführöffnung 21 des Langlochs 20 des jeweils anderen Verschlussteils eingeführt werden.

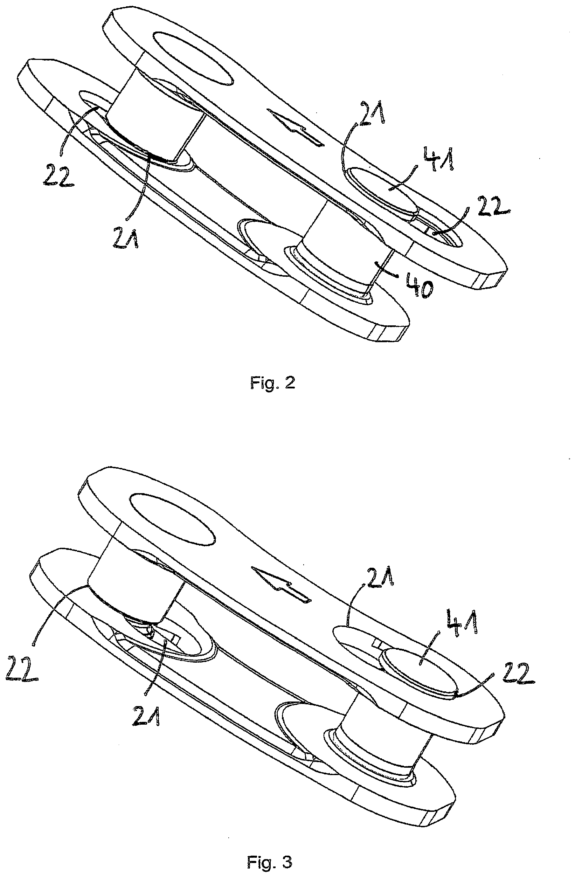

Figur 2 zeigt den ersten Montageschritt des Verschlussgliedes. Dazu wird jeweils der durchmesserkleinere Bolzen 40 des einen Verschlussteils in die durchmessergrößere Einführöffnung 21 des jeweils anderen Verschlussteils eingeführt. Der Bolzen 40 wird so in Richtung der Bolzen-Längsachse B positioniert, dass der Bolzenkopf 41 leicht über die Außenfläche der Verschlussplatte 10 hinaussteht. Das Ineinanderführen der beiden Verschlussteile geschieht ohne Kraftaufwand.

Figur 3 zeigt den darauf folgenden zweiten Montageschritt, bei dem die beiden Verschlussteile gegeneinander verschoben werden. Die Bolzen 40 bewegen sich dabei jeweils entlang des Langlochs 20 von der Einführöffnung 21 zu der Halteöffnung 22. Die Verschiebebewegung findet hauptsächlich in Richtung der Längsachse der Verschlussplatten V statt, der Bolzen 40 bewegt sich dabei nur gering in Richtung seiner Längsachse B. Auf dem Weg von der durchmessergrößeren Einführöffnung 21 zur durchmesserkleineren Halteöffnung 22 passiert der Bolzen 40 einen Verschiebebereich des Langlochs 20. In dem Verschiebebereich des Langlochs 20 sind mehrere Engstellen angeordnet, die der Bolzen 40 überwinden muss. Die Verschiebebewegung des Bolzens 40 kann nur unter Krafteinwirkung geschehen. Der Bolzen 40 schnappt oder rastet sozusagen in der Halteöffnung 22 ein.

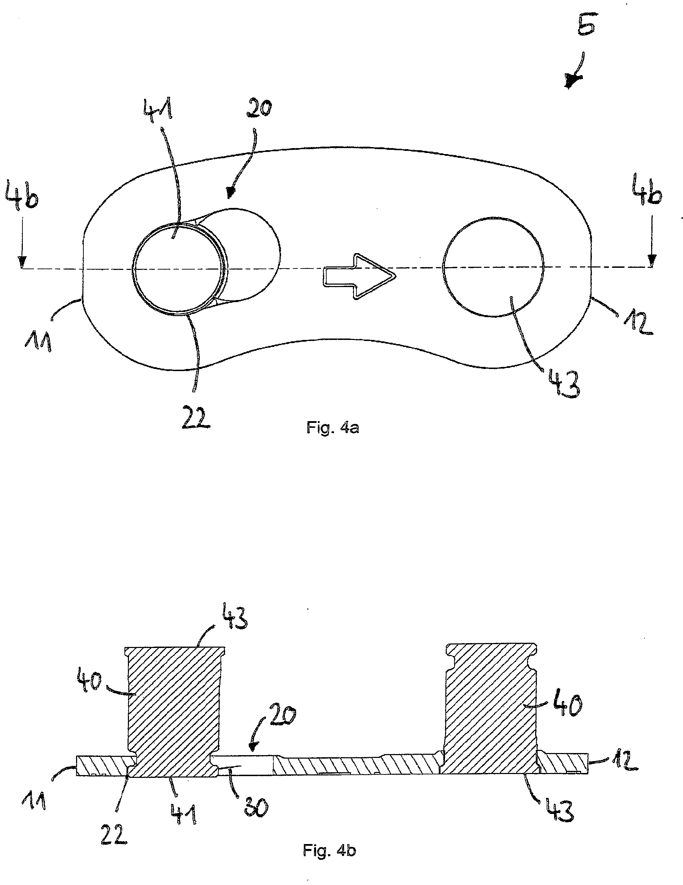

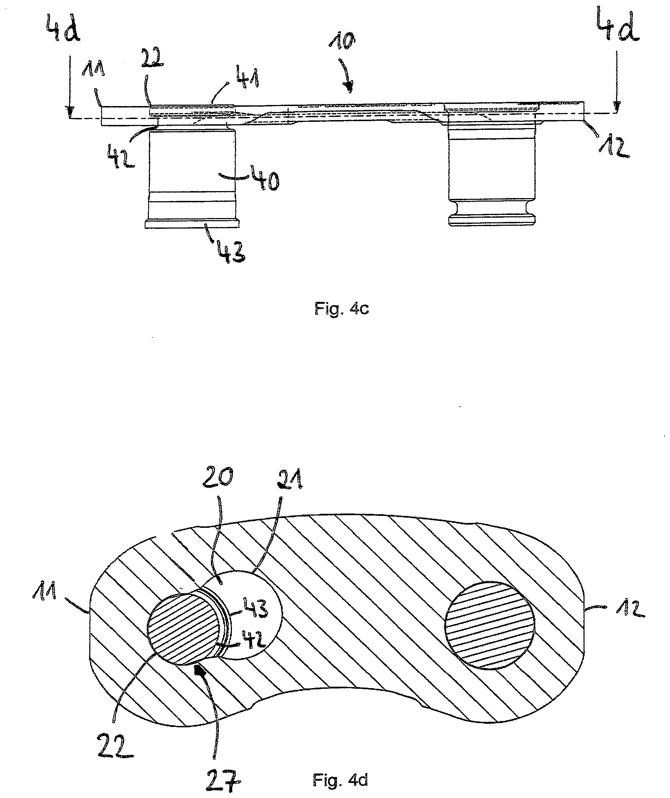

Figuren 4a bis 4d zeigen den dritten Montageschritt und damit auch die Endposition der beiden Verschlussteile. Zur Vereinfachung sind zwar beide Bolzen 40, aber nur eine Verschlussplatte 10 des Verschlussgliedes 5 dargestellt. In Figur 4a ist eine Draufsicht des fertig montierten Verschlussgliedes 5 dargestellt. Der Bolzenkopf 41 befindet sich in seiner Endposition in der Halteöffnung 22 des Langlochs 20. Figur 4b ist die Schnittansicht von Figur 4a entlang der Schnittlinie 4b-4b. Hier ist gut zu erkennen, dass der Bolzenkopf 41, nachdem er die Rampe 30 überwunden hat, so tief im Langloch 20 angeordnet ist, dass er in axialer Richtung B nicht oder kaum über die Außenseite der Verschlussplatte hinausragt. Das hat den Vorteil, dass das Verschlussglied in axialer Richtung B sehr schmal ist und nicht mit anderen Bauteilen, insbesondere den Ritzeln kollidiert. Figur 4c zeigt eine Seitenansicht der Fig. 4a mit den beiden Bolzen 40 und einer Verschlussplatte 10. Der eine Bolzenkopf 40, hier links im Bild, befindet sich in seiner Endposition in der Halteöffnung 22 des Langlochs 20. Figur 4d ist eine Schnittansicht der Figur 4c entlang der Schnittlinie 4d-4d, die knapp unterhalb des Bolzenkopfes 41 durch den Bolzenhals 42 verläuft. Hier ist der Klemmbereich 27, der den Bolzen 40 in der Halteöffnung 22 spielfrei hält, angedeutet. Der Durchmesser D42 des Bolzenhalses 42 ist etwas größer, als der Abstand zwischen den sich gegenüberliegenden Schrägen des Klemmbereichs 27. Die Klemmschrägen greifen am Bolzenhals 42 an und pressen den Bolzen 40 gegen den Rand der Halteöffnung 22 in Richtung des ersten Endbereichs 11. Der Bolzen 40 liegt in der Endposition sowohl am Rand der Halteöffnung 22, als auch an den beiden Klemmschrägen des Klemmbereichs 27 an. Die mindestens drei Kontaktpunkte sorgen für eine spielfreie Klemmung des Bolzens 40 in seiner Endposition.

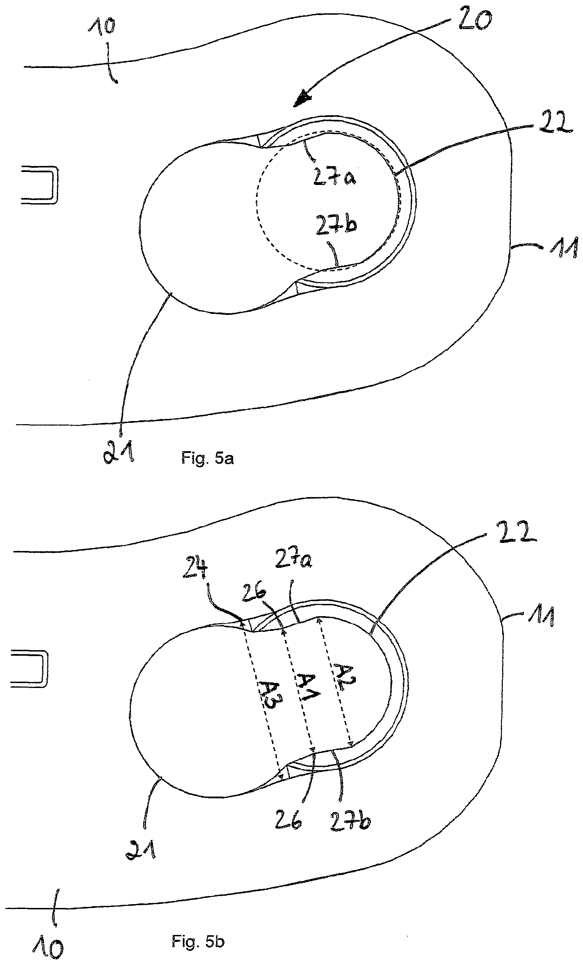

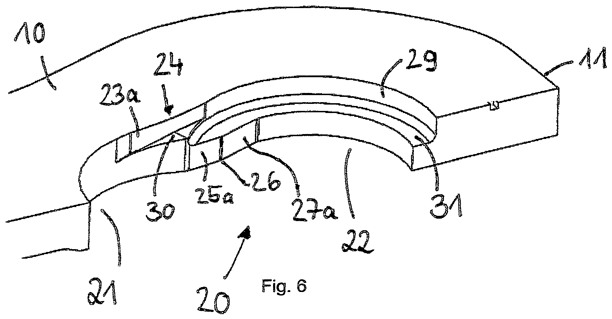

Für ein besseres Verständnis zeigen die Figuren 5a, 5b und 6 Detailansichten des Langlochs 20 ohne den Bolzen 40. Figur 5a ist eine Detailansicht des Langlochs 20 in der Draufsicht - also die Außenseite der Verschlussplatte 10. Das Langloch 20 besteht vereinfacht gesagt aus einer durchmessergrößeren Einführöffnung 21, einem Verschiebebereich und einer durchmesserkleineren Halteöffnung 22. Der Verschiebebereich, der zwischen den beiden Öffnungen 21, 22 liegt, verengt sich in Richtung der Halteöffnung 22. Die Einführöffnung 21 beschreibt einen Kreisabschnitt mit einem Durchmesser D21, der etwas größer bemessen ist, als der Bolzenkopf 41. Auch die Halteöffnung 22 beschreibt einen Kreisabschnitt mit einem Durchmesser D22, der dem Durchmesser D41 des Bolzenhalses 41 entspricht bzw. geringfügig größer ist. An die Halteöffnung 22 schließt sich der Klemmbereich 27 an. Der Klemmbereich 27 wird von zwei sich gegenüber liegenden und nicht-parallel zueinander verlaufenden Klemmschrägen 27a, 27b gebildet. Zur Verdeutlichung ist ein mit Strichlinie gezeichneter Kreis mit einem Durchmesser angedeutet, der in etwa der Halteöffnung 22 bzw. dem Bolzenhals 41 entspricht. Es ist zu erkennen, dass die Klemmschrägen 27a, 27b deutlich innerhalb des angedeuteten Kreises liegen und der Bolzen somit nicht genügend Platz in seiner Endposition haben wird. Der Platzmangel führt bei der Montage zu einer geringfügigen Verformung am Bolzen und an der Verschlussplatte. Diese elastische Verformung verklemmt den Bolzen entlang des Bolzenhalses in dem Langloch 20. Wie in Figur 5b eingezeichnet, vergrößert sich der Abstand zwischen den gegenüberliegenden Klemmschrägen 27a, 27b in Richtung der Halteöffnung 22 von einem Abstandsmaß A1 auf ein Abstandsmaß A2. Dies führt dazu, dass der Bolzen in Richtung der Halteöffnung 22 geschoben wird. Der Abstand A1 zwischen den beiden Klemmschrägen 27a, 27b entspricht gleichzeitig der Hals-Engstelle 26 im Verschiebebereich des Langlochs 20. Der Bolzenhals muss unter Krafteinwirkung diese Hals-Engstelle 26 überwinden, bevor er dann entlang der Klemmschrägen 27a, 27 b in Montagerichtung in die Endposition gedrückt wird. Der Abstand A1 ist dabei etwas kleiner als der Durchmesser D42 des Bolzenhalses bemessen. Der Abstand A2 entspricht in etwa dem Durchmesser D42 des Bolzenhalses. Der Abstand A3 entspricht der Kopf-Engstelle 24 und ist kleiner bemessen als der Durchmesser des Bolzenkopfes. Somit muss der Bolzenkopf diese ebenfalls unter Krafteinwirkung überwinden. Sowohl die zu überwindende Engstelle in Höhe des Bolzenhalses, als auch die Engstelle in Höhe des Bolzenkopfes führt zu einer radialen Klemmung des Bolzens entlang des Halses bzw. des Kopfes. Die beiden Engstellen sind in Montagerichtung hintereinander angeordnet und stellen jeweils eine Demontagesicherung dar.

In einer besonders bevorzugten Ausführungsform hat die Einführöffnung einen Durchmesser von 3,75 mm und die Halteöffnung einen Durchmesser von 3 mm. Der Verschiebebereich verjüngt sich also in Montagerichtung um 0,75 mm. Der Bolzenkopf weist einen Durchmesser von 3,64 mm auf und kann damit leicht in die Einführöffnung geführt werden. Der Bolzenhals weist einen Durchmesser von 2,93 mm auf und findet ausreichend Platz in der Halteöffnung. Der Anfangsabstand A1 zwischen den Klemmschrägen beträgt 2,82 mm und der Endabstand A2 2,93 mm, so dass der Bolzenhals sicher in seiner Endposition gehalten wird.

Figur 6 zeigt eine perspektivische Schnittansicht der Verschlussplatte 10 bzw. des stark vergrößerten Langlochs 20, anhand der sich das Verschieben des Bolzens in Montagerichtung am besten beschreiben lässt. Um die Kontur des Langlochs 20 und insbesondere des Verschiebebereichs besser sichtbar zu machen, wird in Figur 6 nur eine Seite des Langlochs 20 gezeigt und der Verlauf des Bolzens entlang dieser dargestellten Seite des Langlochs 20 erklärt. Selbstredend bewegt sich der Bolzen entlang der anderen (hier nicht sichtbaren) Seite des Langlochs genauso. Die Wirkung der Klemmschrägen und Engstellen kann naturgemäß erst zusammen mit der hier nicht dargestellten Seite des Langlochs entstehen.

Im ersten Montageschritt wird der Bolzenkopf zunächst in die Einführöffnung 21 des Langlochs 20 gesteckt. Der Bolzenkopf befindet sich dann in der oberen Hälfte der Einführöffnung 21 des Langlochs 20 oder etwas darüber (vgl. auch Fig. 2).

Die "obere Hälfte" des Langlochs ist der Bereich des Langlochs, der näher an der Außenseite der Verschlussplatte 10 liegt. Die Außenseite der Verschlussplatte 10 zeigt in Figur 6 nach oben. Die "untere Hälfte" des Langlochs liegt entsprechend näher an der Innenseite der Verschlussplatte. Der Bolzenkopf bewegt sich in Montagerichtung aufgrund der Abmessungen von Bolzen und Langloch lediglich in der oberen Hälfte des Langlochs. Der Bolzenhals bewegt sich entsprechend in der unteren Hälfte des Langlochs. Die untere Hälfte des Langlochs bietet nur im Bereich der Einführöffnung 21 genügend Platz für den Bolzenkopf, nicht aber im Verschiebebereich und im Bereich der Halteöffnung 22.

Der Bolzen wird im zweiten Montageschritt in Montagerichtung (entlang der Langloch-Längsachse L) Richtung Halteöffnung 22 verschoben und passiert dabei in mehreren Schritten den Verschiebebereich zwischen der Einführöffnung 21 und der Halteöffnung 22 (vgl. auch Fig. 3).

Zuerst gleitet der seitliche Rand des Bolzenkopfes unter ansteigender Krafteinwirkung entlang der ansteigenden Kopf-Klemmschräge 23a, bevor er die Kopf-Engstelle 24 erreicht. Auf der hier nicht dargestellten gegenüberliegenden Seite des Langlochs befindet sich die entsprechende zweite Kopf-Klemmschräge (23b). Nachdem der Bolzenkopf die Kopf-Engstelle 24 überwunden hat, liegt er in seiner Endposition am Rand 29 der Ansenkung an. Die Kopf-Engstelle 24 wird von zwei sich gegenüberliegenden Flächen oder Kanten in der oberen Hälfte des Langlochs 20 gebildet. Der Abstand A3 an der Kopf-Engstelle 24 ist geringer bemessen als der Durchmesser D41 des Bolzenkopfes (vgl. Fig. 5b). Der Bolzenkopf kann die Kopf-Engstelle 24 nur unter Krafteinwirkung überwinden.

Gleichzeitig mit der oben beschriebenen Montagebewegung des seitlichen Bolzenkopfrandes entlang der Seiten des Langlochs, gleitet die Unterseite des Bolzenkopfes über die Rampe 30, bevor sie im Grund 31 der Ansenkung in ihrer Endposition anliegt. Die Rampe 30 erstreckt sich in etwa senkrecht zu den Seiten des Langlochs 20. Der Bolzenkopf schnappt, nachdem er die Rampe 30 überwunden hat, in Richtung der Bolzenlängsachse B nach unten auf den Grund 31 der Ansenkung. Die Rampe 30 steigt dabei zunächst an, erreicht dann eine höchste Stelle und fällt danach wieder ab. Die Kante der höchsten Stelle der Rampe 30 ist in Fig. 6 gut sichtbar. Das Niveau der Rampe 30 liegt dabei so weit über dem Grund 31 der Ansenkung, dass dieser Unterschied nur mittels erhöhter Krafteinwirkung überwunden und die Verschlussteile voneinander gelöst werden können. Der Bolzenkopf liegt in seiner Endposition sowohl an dem Rand 29, als auch dem Grund 31 der Absenkung an. Gleichzeitig greift der Rand der Halteöffnung 22 in die umlaufende Bolzennut bzw. den Bolzenhals ein und der restliche Bolzenkörper erstreckt sich unterhalb der Verschlussplatte 10 (vgl. Fig. 4). Somit ist der Bolzen in axialer Richtung B gesichert. Die Rampe 30 ist eine weitere Demontagesicherung.

Gleichzeitig mit der oben beschriebenen Montagebewegung des Bolzenkopfes bewegt sich der Bolzenhals entlang der unteren Hälfte des Langlochs 20. Zuerst gleitet der Bolzenhals unter ansteigender Krafteinwirkung entlang der ansteigenden Hals-Klemmschräge 25a, bevor er die Hals-Engstelle 26 erreicht. Auf der hier nicht dargestellten gegenüberliegenden Seite des Langlochs 20 befindet sich die entsprechende zweite Hals-Klemmschräge 25b. Die Hals-Engstelle 26 wird von zwei sich gegenüberliegenden Kanten in der unteren Hälfte des Langlochs 20 gebildet. Der Abstand A1 an der Hals-Engstelle 26 ist geringer bemessen, als der Durchmesser D42 des Bolzenhalses (vgl. Fig. 5b). Der Bolzenhals kann die Hals-Engstelle 26 nur unter Krafteinwirkung überwinden. Nachdem der Bolzenhals die Hals-Engstelle 26 überwunden hat, wird er von den Klemmschrägen 27a, 27b in seiner Endposition gehalten. Der Klemmbereich 27 wird von zwei sich gegenüberliegenden Klemmschrägen 27a, 27b gebildet. Die beiden Klemmschrägen 27a, b verlaufen zueinander nicht-parallel, sondern in Richtung der Halteöffnung (also in Montagerichtung) voneinander weg, so dass sich deren Abstand voneinander vergrößert. Dies hat den Effekt, dass der Bolzen in Richtung der Halteöffnung 22 gedrückt wird. Der Bolzenhals liegt in seiner Endposition an beiden Klemmschrägen 27a, 27b und am Rand der Halteöffnung 22 an. Damit wird der Bolzen in seiner Endposition spielfrei in der Verschlussplatte 10 gehalten bzw. geklemmt. Die Klemmung erfolgt in radialer Richtung des Bolzens und stellt eine weitere Demontagesicherung dar.

Die beiden oben beschriebenen Engstellen liegen auf verschiedenen Höhen. Des Weiteren sind die Engstellen in Montagerichtung (von der Einführöffnung 21 in Richtung Halteöffnung 22) nacheinander angeordnet. Im gezeigten Ausführungsbeispiel liegt die Kopf-Engstelle 24 in Montagerichtung vor der Hals-Engstelle 26. Das heißt der Bolzenkopf muss zuerst die Kopf-Engstelle 24 passieren, bevor der Bolzenhals die Hals-Engstelle 26 passieren kann. Die Engstellen könnten aber auch übereinander angeordnet sein, so dass sie gleichzeitig überwunden werden müssen.

Nachdem der Bolzen die beiden radialen Engstellen im Bereich des Bolzenkopfes und Bolzenhalses und auch die axiale Klemmwirkung der Rampe überwunden hat, schnappt er in seiner Endposition ein und liegt aufgrund des erfindungsgemäßen Klemmbereichs 27 spielfrei an der Verschlussplatte 10 an.

Während der Montage überwinden die beiden Bolzen der beiden Verschlussteile gleichzeitig die jeweiligen Demontagesicherungen, so dass die Verschlussteile in ihrer Endposition spielfrei und sicher festgelegt sind. Die Montage muss entsprechend unter einer relativ großen Krafteinwirkung erfolgen, die idealerweise mittels einem Montagewerkzeug definiert und kontrolliert ausgeübt werden kann.

In Demontagerichtung (von der Halteöffnung 22 in Richtung der Einführöffnung 21) müssen ebenfalls alle oben beschriebenen Demontagesicherungen überwunden werden, was mindestens so viel Krafteinwirkung wie die Montage verlangt. Auch für die Demontage ist ein entsprechendes Werkzeug notwendig. Während der Fahrt werden auch bei stärksten Belastungen solch hohe Kräfte äußerst selten erreicht, so dass ein stabiler Verschluss der Kette gewährleistet ist.

Die verschiedenen Demontagesicherungen in Form der Engstelle auf Höhe des Bolzenhalses und/oder der Engstelle auf Höhe des Bolzenkopfes, der Klemmflächen in Höhe des Bolzenhalses und/oder der Klemmflächen in Höhe des Bolzenkopfes (radiale Bolzenklemmung) und die Rampe (axiale Bolzenklemmung) sind getrennt voneinander oder in Kombination miteinander anwendbar.

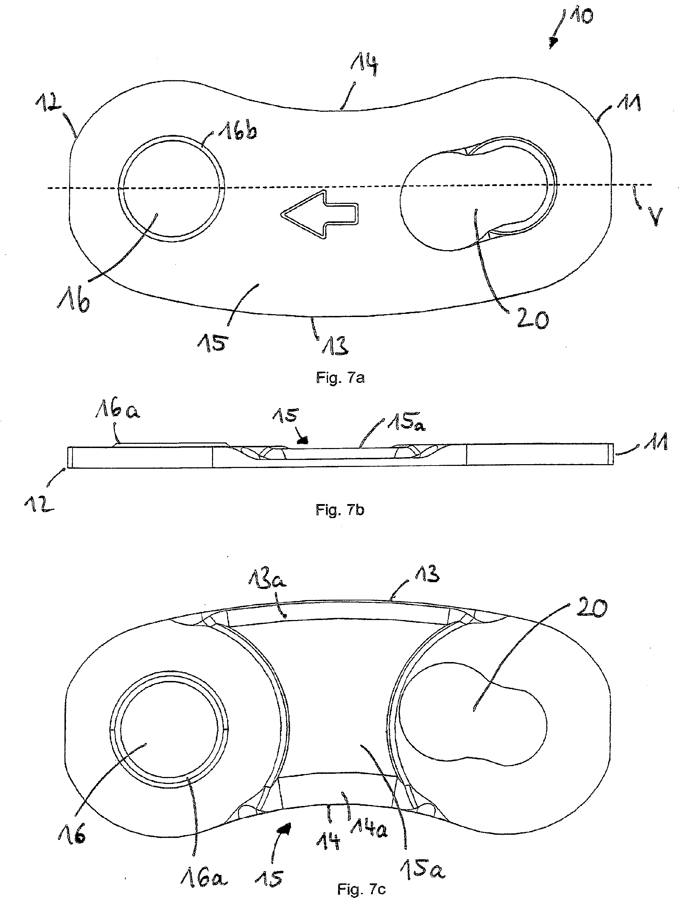

Figur 7 zeigt eine erste Ausführungsform einer erfindungsgemäßen Verschlussplatte 10. In der Draufsicht in Figur 7a ist die Form der Verschlussplatte 10 gut zu erkennen. So ist die Verschlussplatte 10 entlang ihrer Längsachse V asymmetrisch ausgebildet. Der Verbindungsbereich 15, welcher zwischen dem ersten Endbereich 11 und dem zweiten Endbereich 12 angeordnet ist, ist nicht wie im Stand der Technik tailliert ausgebildet. Der Verbindungsbereich 15 weist einen konkaven Randbereich 14 und einen konvexen Randbereich 13 auf. In der Draufsicht ist weiter das Langloch 20 und die Bolzenbohrung 16 mit ihrer Ansenkung 16b zu erkennen. Die Ansenkung 16b schafft Platz zum Vernieten des Bolzenfußes und nimmt das verformte Material des Bolzenfußes auf. Damit wird verhindert, dass das verformte Material des Bolzenfußes über die Oberfläche der Verschlussplatte 10 hinaus übersteht und mit anderen Teilen des Fahrradantriebs, z. B. beim Schalten kollidiert. In der in Figur 7b dargestellten Seitenansicht der Verbindungsplatte 10 ist die Aussparung 15a im Verbindungsbereich 15 deutlich zu erkennen. Der Verbindungsbereich 15 ist gegenüber den beiden Endbereichen 11, 12 deutlich abgesenkt. Die Materialstärke der Verschlussplatte 10 im Bereich der Aussparung 15a ist also geringer, als in den Endbereichen 11, 12. Die Aussparung 15a in der Verschlussplatte 10 erleichtert das Eingreifen eines Zahnes, auch wenn die Verschlussplatten 10 in montiertem Zustand sehr eng beisammen stehen. Figur 7a zeigt die Innenseite der Verschlussplatte 10. Auch hier ist die Aussparung 15a deutlich zu erkennen. Die Aussparung 15a wird durch die bogenförmigen Endbereiche 11, 12 begrenzt und erstreckt sich bis zu den Rändern 13 und 14. Somit ergibt sich eine Aussparung 15a, die im Bereich der Verschlussplatten-Längsachse V eine geringere Breite als an den Randbereichen 13, 14 aufweist. Der Übergang zwischen der Aussparung 15a und den Fasen 13a und 14a ist dabei abgerundet. Zwischen der Absenkung 15a und den Fasen 13a, 14a gibt es vorzugsweise keine Kanten sondern tangentiale Übergänge. Die Fasen 13a und 14a entlang der Ränder erleichtern das Eindringen des Zahnes noch weiter. Die Bolzenbohrung 16 weist an der Innenseite der Verschlussplatte 10 eine Auskragung 16a auf. Diese entsteht durch die Ansenkung 16b auf der Außenseite der Verschlussplatte 10, weil Material auf die andere Seite durchgedrückt wird. Die Auskragung 16a erhöht die Stabilität der Platte 10.

Die aufgrund der Aussparung 15a reduzierte Materialstärke und der damit einhergehende reduzierte Querschnitt der Verschlussplatte 10 wird durch die geänderte Außenkontur der Verschlussplatte 10 ausgeglichen. Der konvexe Rand 13 erhöht den Querschnitt der Verschlussplatte 10 und steigert damit deren Stabilität. Die Verschlussplatte 10 wird aus einem ebenen Ausgangsmaterial hergestellt. Die ursprüngliche Materialdicke findet sich lediglich noch in den Endbereichen 11, 12. Im Verbindungsbereich 15 ist von der ursprünglichen Materialdicke etwas weggenommen, so dass die Aussparung 15a insbesondere durch Prägen geschaffen wird.

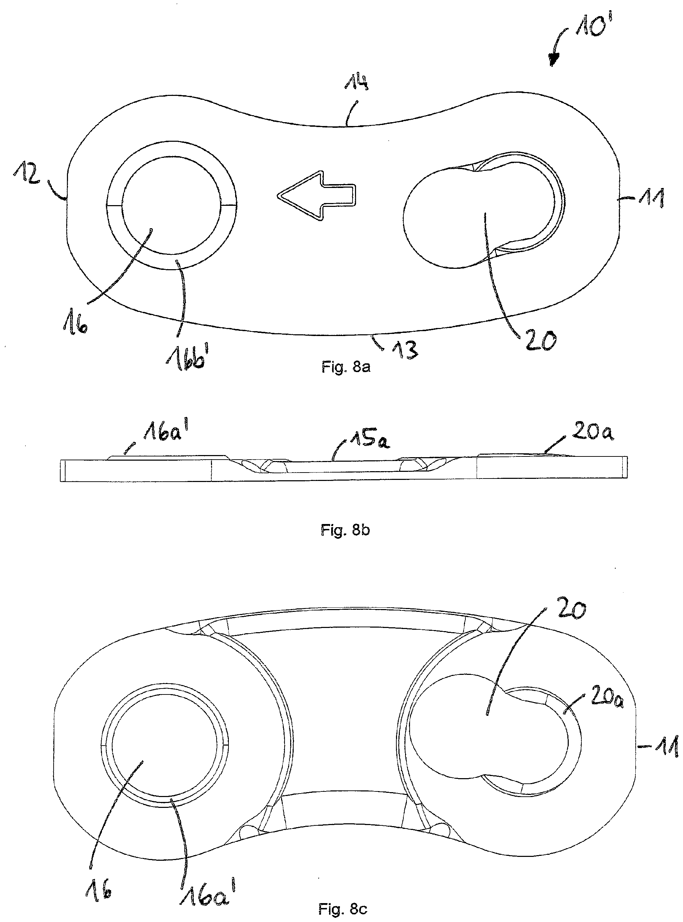

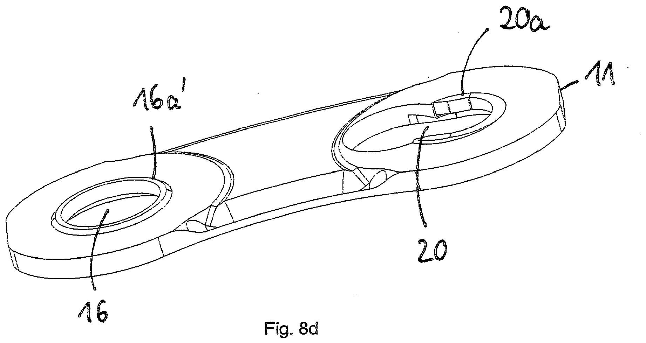

Figur 8a-d zeigt eine zweite Ausführungsform der Verschlussplatte 10'. Die Verschlussplatten 10 und 10' unterscheiden sich lediglich durch die vergrößerte Ansenkung 16b' der Bolzenbohrung 16 an der Außenseite und der damit einhergehenden vergrößerten Auskragung 16a' an der Innenseite. Die vergrößerte Ansenkung 16b' kann mehr verformtes Bolzenmaterial aufnehmen. Die Auskragung 16a' bietet noch mehr Stabilität im Bereich der Bolzenbohrung 16. Auch das Langloch 20 weist in diesem Ausführungsbeispiel eine Auskragung 20a auf der Innenseite der Verschlussplatte 10' auf. Auch diese Auskragung 20a wird durch Materialverformung der Platte 10' erzeugt und trägt zur Stabilität im Bereich des Langlochs 20 bei. Die Auskragung 20a fällt in Richtung des ersten Endbereichs 11 ab und ist besonders gut in der Seitenansicht und in der Perspektive zu erkennen.

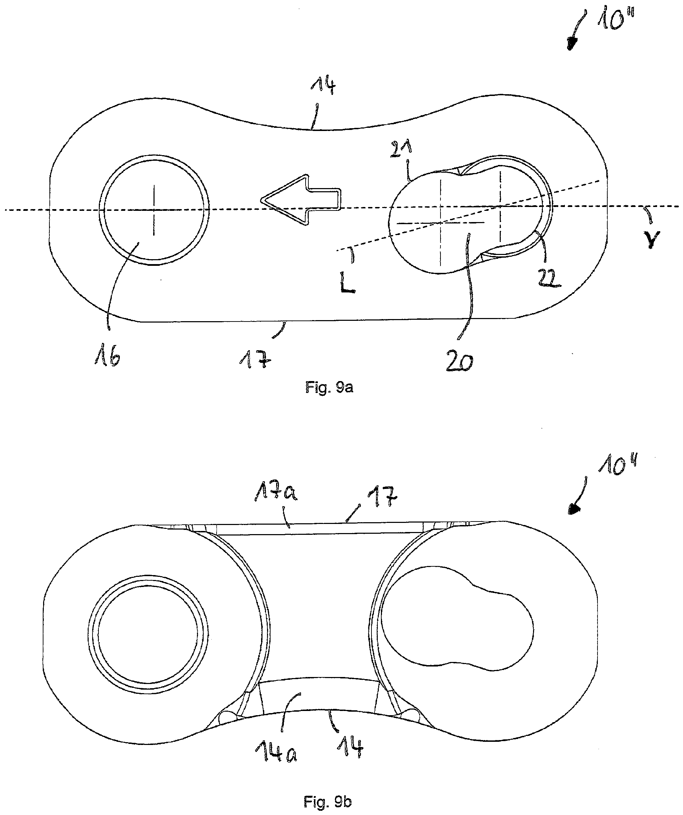

Figur 9a zeigt die Außenseite und 9b die Innenseite einer dritten Ausführungsform der Verschlussplatte 10". Diese Verschlussplatte 10" unterscheidet sich von den beiden anderen aufgrund ihrer Kontur. Hier ist ein Randbereich 14 konkav und der andere Randbereich 17 gerade ausgebildet. Der konkave Randbereich 14 folgt der Form der übrigen Außen- und Innenlaschen und der gerade Randbereich 17 ist ein guter Kompromiss zwischen Stabilität und Abrollverhalten am oberen Kettenröllchen des Schaltwerks. Auch der gerade Randbereich 17 weist eine Fase 17a auf, die das Eingreifen eines Zahnes in den Zwischenraum zwischen zwei gegenüberliegenden Verschlussplatten erleichtert. Die Fasen 13a, 14a, 17a bei allen Ausführungsformen bilden eine Art Trichterform mit einer möglichst großen lichten Weite für die eingreifenden Zähne aus.

Außerdem ist in Figur 9a die Schrägstellung des Langlochs 20 gegenüber der Längsachse V der Verschlussplatte gut zu erkennen. Die Mittelpunkte der beiden Öffnungen 21, 22 liegen auf der Langlochlängsachse L, welche um etwa 15 Grad gegenüber der Verschlussplatten-Längsachse V gedreht ist. Diese Ausrichtung des Langlochs 20 in der Verschlussplatte 10 stellt sich, damit genügend Material um das Langloch 20 herum verbleibt, um die Verschlussplatte 10 ausreichend stabil zu gestalten und Ermüdungsbrüche zu verhindern.

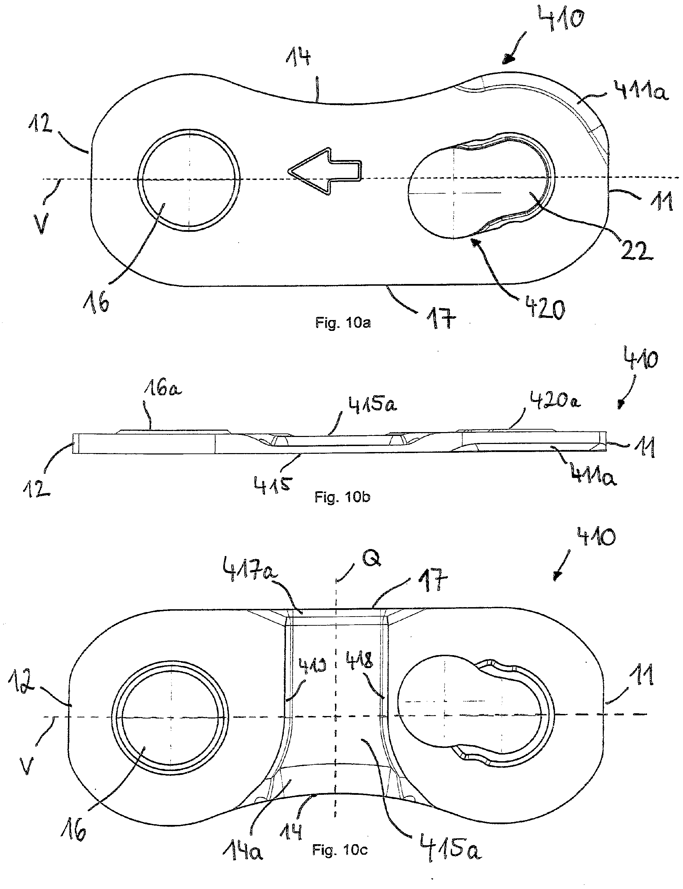

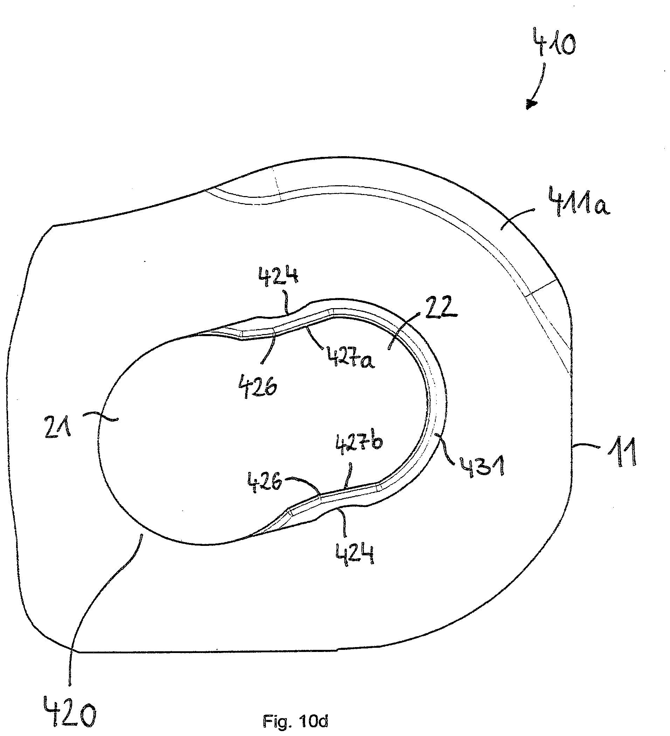

Figur 10a zeigt eine vierte Ausführungsform der Verschlussplatte 410 in der Draufsicht. Die Verschlussplatte 410 weist ebenfalls einen ersten und zweiten Endbereich 11, 12, einen konkaven Randbereich 14 und einen im Wesentlichen geradlinig verlaufenden geraden Randbereich 17 auf. Die Bolzenbohrung 16 und das Langloch 420 entsprechen weitestgehend den vorherigen Ausführungsbeispielen. Auf die sich unterscheidenden Demontagesicherungen der vierten Ausführungsform wird in Zusammenhang mit Figur 10d näher eingegangen. Die Längsachse V der Verschlussplatte 410 verläuft wie bei den vorherigen Ausführungen durch die Mittelpunkte der Bolzenbohrung 16 und der Halteöffnung 22. Der gerade Randbereich 17 erstreckt sich parallel zur Längsachse V der Verschlussplatte 410. Auf der in der Draufsicht sichtbaren Außenseite der Verschlussplatte 410 ist eine erste Fase 411a angeordnet. Insbesondere im Bereich zwischen dem ersten Endbereich 11 und dem konkaven Randbereich 14 der Verschlussplatte 410 verbessert die erste Fase 411a das Schaltverhalten der Kette.

Figur 10b zeigt die vierte Ausführungsform in einer Seitenansicht. Hier werden sowohl die Auskragung 16a an der Bolzenbohrung 16, als auch die Auskragung 420a am Langloch 420 sichtbar. Auch ist der gegenüber den Endbereichen 11, 12 abgesenkte Verbindungsbereich 415 bzw. die Aussparung 415a zu erkennen. Das zusätzliche Material der Auskragungen 16a und 420a führt zu einer Erhöhung des Querschnitts und damit zu mehr Stabilität und Bruchwiderstand der Verschlussplatte 410 im Bereich der beiden Öffnungen 16, 420.

Figur 10c zeigt die Verschlussplatte 410 in der Unteransicht bzw. die Innenseite der Platte 410. Hier ist auch die senkrecht zur Längsachse V verlaufende Querachse Q der Verschlussplatte 410 eingezeichnet. Auch bei diesem Ausführungsbeispiel sind Fasen 417a und 14a entlang der Randbereiche 17 und 14 vorgesehen. Sie erleichtern das Eingreifen eines Zahnes in den Zwischenraum zwischen zwei sich gegenüberliegenden Verschlussplatten. Wie in den vorherigen Ausführungsbeispielen, wird die Aussparung 415a einerseits durch die beiden Endbereiche 11, 12 begrenzt und erstreckt sich andererseits bis zu den Randbereichen 14, 17. Allerdings unterscheidet sich der Verlauf der Begrenzungen durch die Endbereiche 11, 12 bzw. die erste Kontur 418 der Ausnehmung 415a und die zweite Kontur 419 der Ausnehmung 415a von den vorherigen, durchgängig bogenförmigen Ausführungsbeispielen.

Die erste Kontur 418 und die zweite Kontur 419 der Ausnehmung 415a verlaufen bezüglich der Querachse Q symmetrisch. Die Konturen 418, 419 der Aussparung 415a weisen vom konkaven Randbereich 14 hin zur mittig gelegenen Längsachse V einen gebogenen, sich verjüngenden Verlauf auf. Von der Längsachse V zum geraden Randbereich 17 hin verlaufen sie im Wesentlichen geradlinig, also parallel zur Querachse Q. Somit ist die Aussparung 415a in Richtung der Längsachse V im Bereich des geraden Randbereichs 17 geringer bemessen, als im Bereich des konkaven Randbereichs 14. Außerdem ist die Aussparung 415a im Bereich nahe der Längsachse V geringer bemessen, als im Bereich nahe des konkaven Randbereichs 14. Die Aussparung 415a ist im Bereich der Längsachse V und im Bereich des geraden Randbereichs 17 in etwa gleich groß bemessen. Das hat den Vorteil, dass mehr Material am Randbereich 17 zu einer erhöhten Querschnittsfläche der Verschlussplatte 410 und mehr Stabilität führt. Im Vergleich dazu ist die Querschnittsfläche des vorherigen Ausführungsbeispiels aufgrund der sich in Richtung des konkaven Randbereichs 14 und auch in Richtung des geraden Randbereichs 17 hin vergrößernden Aussparung 15a (durchgängig bogenförmige Kontur der Aussparung) etwas geringer. Der aufgrund der verkleinerten Aussparung 415a erhöhte Querschnitt der Verschlussplatte 410 trägt dazu bei, den etwas reduzierten Querschnitt eines geraden Randbereichs 17 im Vergleich zu einem konvexen Randbereich 13 (Fig. 1a bis 8) auszugleichen.

Die Zahneingriffsöffnung des Verschlussgliedes ist somit an den konkaven Randbereichen 14 in Längsrichtung der Verschlussplatten 410 größer bemessen, als auf der Seite der geraden Randbereiche 17. Bei den vorhergehenden Ausführungsbeispielen ist die Aussparung 15a am nicht-konkaven Rand 13, 17 deutlich größer bemessen, als am konkaven Rand 14. Die an den Randbereichen 17 schmalere Aussparung 415a ist dennoch ausreichend groß, um einen reibungslosen Betrieb sicherzustellen. Im fahrbereiten Zustand bildet die Fahrradkette 1 eine geschlossene Kettenschleife, deren Glieder mit den Zähnen des vorderen Kettenblatts und der Ritzel in Eingriff stehen und das untere und das obere Kettenführungsröllchen des Schaltwerks in einer s-förmigen Kurve durchlaufen. Dabei weisen die konkaven Randbereiche 14 des Verschlussgliedes in Richtung der Zähne des Kettenblatts, der Ritzel und auch des unteren Kettenführungsröllchens. Nur beim Durchlaufen des oberen Kettenführungsröllchens, weisen die geraden Randbereiche 17 und nicht die konkaven Randbereiche 14 in Richtung der Zähne des oberen Kettenführungsröllchens. Üblicherweise weist das obere Kettenführungsröllchen nur eine Gruppe von dünnen Zähnen auf, deren axiale Breite auf die Zahneingriffsöffnungen der Innenlaschenpaare abgestimmt ist. Die geringer bemessene Aussparung 415a des Verschlussgliedes ist daher im Bereich des geraden Randbereichs 17 immer noch ausreichend groß, um die Zähne des oberen Kettenführungsröllchens aufnehmen zu können.

Aus denselben Gründen wäre es auch denkbar, die Aussparung nur vom konkaven Randbereich bis in den mittigen Bereich der Längsachse auszubilden. Der übrige Bereich von der Längsachse bis zum geraden Randbereich wäre dann frei von einer Aussparung. Dies hätte den Vorteil, dass mehr Material im Bereich des geraden Randbereichs den Querschnitt und damit die Stabilität der Verschlussplatte weiter erhöhen würde. Die Zahneingriffsöffnung am geraden Randbereich wäre immer noch ausreichend groß für das obere Kettenführungsröllchen.

Figur 10d zeigt eine Detailansicht des Langlochs 420 aus Figur 10a. Hier werden die verschiedenen Demontagesicherungen gut sichtbar. Grundsätzlich folgt das vierte Ausführungsbeispiel den vorherigen insofern, dass auch die in Zusammenhang mit den Figuren 5a und 5b beschriebenen Verhältnisse der Bolzendurchmesser zu den Langlochöffnungen 21, 22 und zu den Abständen A1, A2 und A3 entsprechend anwendbar sind. Die Verschlussplatte 410 weist ebenfalls eine Kopf-Engstelle 424, eine Hals-Engstelle 426 und einen sich daran anschließenden Klemmbereich 427 mit zwei Klemmschrägen 427a, 427b auf. In dem gezeigten Fall muss ein Bolzen bei der Montage (Verschiebung des Bolzens von der Einführöffnung 21 in Richtung der Halteöffnung 22) zunächst die Hals-Engstelle 426 und anschließend die Kopf-Engstelle 424 passieren. Eine umgekehrte Reihenfolge bzw. Anordnung der Engstellen wäre auch denkbar. Eine aufeinanderfolgende Anordnung der Engstellen ist insofern positiv, weil die Kräfte nicht gleichzeitig auf Bolzenkopf und Bolzenhals wirken, sondern nacheinander. Es wäre aber auch möglich, die beiden Engstellen so anzuordnen, dass diese gleichzeitig vom Bolzen passiert werden.

Im Unterschied zu den vorherigen Ausführungsformen wird hier auf eine Rampe als zusätzliche Demontagesicherung verzichtet. Der Grund 431 der Ansenkung im Langloch 420 verläuft somit durchgängig auf einer Ebene. Das heißt, die Unterseite des Bolzenkopfes gleitet bei der Montage des Ketten-Verschlussglieds entlang des Grunds 431 der Ansenkung, bis der Bolzen in seiner Endposition in der Halteöffnung 22 angelangt ist. Bei der Montage muss der Bolzen also zunächst die Hals-Engstelle 426 und danach die Kopf-Engstelle 424 überwinden. Anschließend wird der Bolzen im Klemmbereich 427 von den beiden nicht-parallel verlaufenden Klemmschrägen 427a, 427b in Richtung der Halteöffnung 22 (also in Montagerichtung) gedrückt.

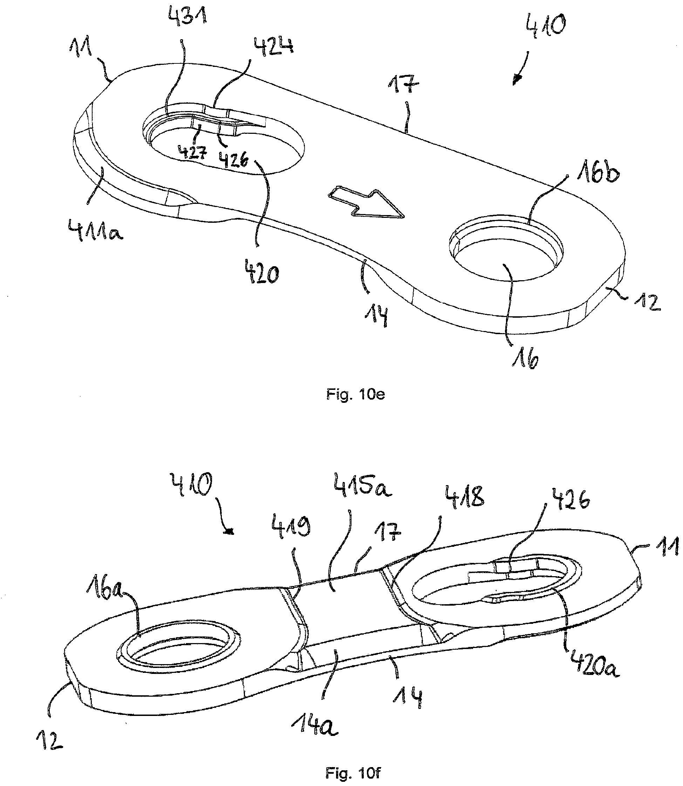

Die Figuren 10e und 10f zeigen eine perspektivische Draufsicht und eine perspektivische Unteransicht der Verschlussplatte 410. In der Perspektive werden die verschiedenen Ebenen der Verschlussplatte 410 besonders gut sichtbar. Auf der Außenseite (Fig. 10e) der Verschlussplatte 410 liegt der Grund 431 der Ansenkung des Langlochs 420 und die Ansenkung 16b der Bolzenbohrung 16 deutlich tiefer als die äußere Oberfläche der Verschlussplatte 410. Auf der Innenseite (Fig. 10f) der Verschlussplatte 410 ist aufgeworfenes Material in Form der Auskragung 16a der Bolzenbohrung 16 und der Auskragung 420a des Langlochs 420 sichtbar. Die Aussparung 415a im Verbindungsbereich der Verschlussplatte 410 ist gegenüber den Endbereichen 11, 12 deutlich abgesenkt. In der Perspektive sind auch die Fasen 411a, 14a und die Reihenfolge der Hals-Engstelle 426 und Kopf-Engstelle 424 gut zu erkennen.

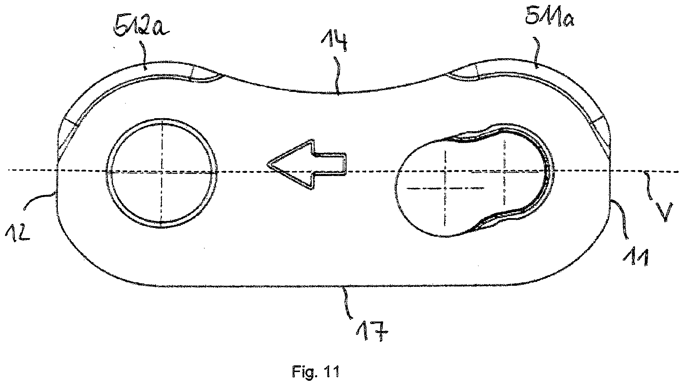

Figur 11 zeigt eine fünfte Ausführungsform der Verschlussplatte 510 in der Draufsicht. Diese unterscheidet sich von der vierten Ausführungsform lediglich dadurch, dass sie auf ihrer Außenseite zusätzlich zu der ersten Fase 511a am ersten Endbereich 11 eine zweite Fase 512a am zweiten Endbereich 12 aufweist. Die beiden Fasen 511a und 512a sind in Richtung des konkaven Randbereichs 14 bzw. im Bereich zwischen den Endbereichen 11, 12 und dem konkaven Randbereich 14 angeordnet. Beim Wechsel der Kette zwischen benachbarten Ritzeln gleiten die Fasen 511a, 512a an den Zähnen entlang und verbessern das Ein- und Ausgleiten der Kette.

Es wäre auch denkbar, nur eine Fase 512a am ersten Randbereich 12 anzuordnen und auf die Fase 511a zu verzichten (nicht dargestellt). Ebenfalls denkbar wäre es, weitere Fasen entlang der äußeren Randbereiche, z. B. in Richtung des geraden Randbereichs 17 anzuordnen. Allgemein gesprochen folgt das Ketten-Verschlussglied in Form und Anordnung der Fasen soweit möglich den Außenlaschengliedern. Auf diese Weise wird ein möglichst homogenes Verhalten der Kette gewährleistet.

## Patentansprüche

1. Ketten-Verschlussglied (5) für eine Fahrradkette (1) bestehend aus zwei Verschlussteilen mit jeweils einer Verschlussplatte (10, 410, 510) und einem mit der Verschlussplatte (10, 410, 510) drehfest verbundenen Kettenbolzen (40),
- wobei die Verschlussplatte (10, 410, 510) einen ersten Endbereich (11), einen zweiten Endbereich (12) und einen Verbindungsbereich (15, 415) zwischen den beiden Endbereichen (11, 12) aufweist,
- und ferner ein Langloch (20, 420), umfassend eine Einführöffnung (21), eine Halteöffnung (22) und einen zwischen der Einführöffnung (21) und der Halteöffnung (22) liegenden Verschiebebereich, in dem ersten Endbereich (11) der Verschlussplatte (10, 410, 510) angeordnet ist,
wobei sich der Verschiebebereich von der Einführöffnung (21) hin zur Halteöffnung (22) verengt und eine Hals-Engstelle (26, 426) bildet,
- wobei der Kettenbolzen (40) an einem Ende einen Bolzenkopf (41) mit einem Bolzenhals (42) und an dem anderen Ende einen Bolzenfuß (43) aufweist,
- wobei ein Durchmesser (D21) der Einführöffnung (21) größer ist, als ein Durchmesser (D41) des Bolzenkopfes (41), und ein Durchmesser (D22) der Halteöffnung (22) kleiner ist, als der Durchmesser (D41) des Bolzenkopfes (41) sowie größer als ein Durchmesser (D42) des Bolzenhalses (42),
- wobei die Hals-Engstelle (26, 426) kleiner bemessen ist, als der Durchmesser (D42) des Bolzenhalses (42), und
- zwischen der Hals-Engstelle (26, 426) und der Halteöffnung (22) des Langlochs (20, 420) ein Klemmbereich (27, 427) angeordnet ist, der kleiner bemessen ist als der Durchmesser (D42) des Bolzenhalses (42),
- **dadurch gekennzeichnet, dass** die Verschlussplatte (10, 410, 510) bezüglich ihrer Längsachse (V) asymmetrisch ausgebildet ist, und der Verbindungsbereich (15, 415) der Verschlussplatte (10, 410, 510) einen konkaven Randbereich (14) und einen nicht-konkaven Randbereich aufweist, wobei der nicht-konkave Randbereich als gerader Randbereich (17) ausgebildet ist.

2. Ketten-Verschlussglied (5) nach Anspruch 1,
**dadurch gekennzeichnet,**
**dass** der Klemmbereich (27, 427) von zwei sich gegenüberliegenden und zueinander nicht-parallel verlaufenden Klemmschrägen (27a, 27b, 427a, 427b) gebildet wird.

3. Ketten-Verschlussglied (5) nach Anspruch 1 oder 2,
**dadurch gekennzeichnet,**
**dass** das Langloch (20) in seinem Verschiebebereich eine Rampe (30) aufweist, entlang der der Bolzenkopf (41) bei der Montage des Ketten-Verschlussgliedes (5) mit seiner Unterseite gleitet, wobei die Rampe (30) in Richtung der Halteöffnung (22) ansteigt.

4. Ketten-Verschlussglied (5) nach einem der vorhergehenden Ansprüche,
**dadurch gekennzeichnet,**
**dass** sich der Verschiebebereich von der Einführöffnung (21) hin zur Halteöffnung (22) verengt und eine Kopf-Engstelle (24, 424) bildet, die kleiner bemessen ist, als der Durchmesser (D41) des Bolzenkopfes (41).

5. Ketten-Verschlussglied (5) nach einem der vorhergehenden Ansprüche,
**dadurch gekennzeichnet,**
**dass** eine Längsachse (L) des Langlochs (20, 420) schräg zur Verschlussplatten-Längsachse (V) verläuft.

6. Ketten-Verschlussglied (5) nach Anspruch 5,
**dadurch gekennzeichnet,**
**dass** die Langloch-Längsachse (L) in einem Winkelbereich von 5 Grad bis 25 Grad, insbesondere von 15 Grad, zur Verschlussplatten-Längsachse (V) verläuft.

7. Ketten-Verschlussglied (5) nach einem der vorhergehenden Ansprüche,
**dadurch gekennzeichnet,**
**dass** der Verbindungsbereich (15, 415) der Verschlussplatte (10, 410) eine Aussparung (15a, 415a) aufweist.

8. Ketten-Verschlussglied (5) nach Anspruch 7,
**dadurch gekennzeichnet,**
**dass** die Aussparung (415a) in Richtung der Verschlussplatten-Längsachse (V) im Bereich des geraden Randbereichs (17) geringer bemessen ist, als im Bereich des konkaven Randbereichs (14).

9. Ketten-Verschlussglied (5) für eine Fahrradkette (1), bestehend aus zwei Verschlussteilen mit jeweils einer Verschlussplatte (10, 410, 510) und einem mit der Verschlussplatte (10, 410, 510) drehfest verbundenen Kettenbolzen (40),
- wobei die Verschlussplatte (10, 410, 510) einen ersten Endbereich (11), einen zweiten Endbereich (12) und einen Verbindungsbereich (15, 415) zwischen den beiden Endbereichen (11, 12) aufweist, und
- der Verbindungsbereich (15, 415) der Verschlussplatte (10, 410, 510) einen konkaven Randbereich (14) und einen nicht-konkaven Randbereich (17) aufweist,
- und ferner ein Langloch (20, 420), umfassend eine Einführöffnung (21), eine Halteöffnung (22) und einen zwischen der Einführöffnung (21) und der Halteöffnung (22) liegenden Verschiebebereich, in dem ersten Endbereich (11) der Verschlussplatte (10, 410, 510) angeordnet ist,
wobei sich der Verschiebebereich von der Einführöffnung (21) hin zur Halteöffnung (22) verengt und eine Kopf-Engstelle (24, 424) und/oder Hals-Engstelle (26, 426) bildet,
- wobei der Kettenbolzen (40) an einem Ende einen Bolzenkopf (41) mit einem Bolzenhals (42) und an dem anderen Ende einen Bolzenfuß (43) aufweist,
- wobei ein Durchmesser (D21) der Einführöffnung (21) größer ist, als ein Durchmesser (D41) des Bolzenkopfes (41), und
ein Durchmesser (D22) der Halteöffnung (22) kleiner ist, als der Durchmesser (D41) des Bolzenkopfes (41), sowie größer als ein Durchmesser (D42) des Bolzenhalses (42), und
die Kopf-Engstelle (24, 424) kleiner bemessen ist, als der Durchmesser (D41) des Bolzenkopfes (41) und/oder die Hals-Engstelle (26, 426) kleiner bemessen ist, als der Durchmesser (D42) des Bolzenhalses (42),
- wobei der Verbindungsbereich (15, 415) der Verschlussplatte (10, 410, 510) eine Aussparung (15a, 415a) aufweist,
**dadurch gekennzeichnet,**
**dass** der nicht-konkave Randbereich als gerader Randbereich (17) ausgebildet ist.

10. Ketten-Verschlussglied (5) nach Anspruch 9,
**dadurch gekennzeichnet,**
**dass** eine Langloch-Längsachse (L) des Langlochs (20, 420) schräg zur Verschlussplatten-Längsachse (V) verläuft.

11. Ketten-Verschlussglied (5) nach Anspruch 10,
**dadurch gekennzeichnet,**
**dass** die Langloch-Längsachse (L) in einem Winkelbereich von 5 Grad bis 25 Grad, insbesondere von 15 Grad, zur Verschlussplatten-Längsachse (V) verläuft.

12. Ketten-Verschlussglied (5) nach einem der Ansprüche 9 bis 11,
**dadurch gekennzeichnet,**
**dass** zwischen der Kopf-Engstelle (24, 424) und der Halteöffnung (22) des Langlochs ein Klemmbereich angeordnet ist, der kleiner bemessen ist, als der Durchmesser (D41) des Bolzenkopfes (41) und/oder zwischen der Hals-Engstelle (26, 426) und der Halteöffnung (22) des Langlochs ein Klemmbereich (27, 427) angeordnet ist, der kleiner bemessen ist, als der Durchmesser (D42) des Bolzenhalses (42).

13. Ketten-Verschlussglied (5) nach Anspruch 12,
**dadurch gekennzeichnet,**
**dass** der Klemmbereich (27, 427) von zwei sich gegenüberliegenden und zueinander nicht-parallel verlaufenden Klemmschrägen (27a, 27b, 427a, 427b) gebildet wird.

14. Ketten-Verschlussglied (5) nach Anspruch 9 bis 13,
**dadurch gekennzeichnet,**
**dass** das Langloch (20) in seinem Verschiebebereich eine Rampe (30) aufweist, entlang der der Bolzenkopf (41) bei der Montage des Ketten-Verschlussgliedes (5) mit seiner Unterseite gleitet, wobei die Rampe (30) in Richtung der Halteöffnung (22) ansteigt.

15. Ketten-Verschlussglied (5) nach Anspruch 14,
**dadurch gekennzeichnet, dass** die Aussparung (415a) in Richtung der Verschlussplatten-Längsachse (V) im Bereich des geraden Randbereichs (17) geringer bemessen ist, als im Bereich des konkaven Randbereichs (14).

## Claims

1. Chain-closing link (5) for a bicycle chain (1), comprising two closing parts each with a closing plate (10, 410, 510) and a chain pin (40) connected in a rotationally fixed manner to the closing plate (10, 410, 510),
- wherein the closing plate (10, 410, 510) has a first end region (11), a second end region (12) and a connecting region (15, 415) between the two end regions (11, 12),
- and, furthermore, a slot (20, 420), comprising an introduction opening (21), a retaining opening (22) and a displacement region located between the introduction opening (21) and the retaining opening (22), is arranged in the first end region (11) of the closing plate (10, 410, 510),
wherein the displacement region narrows from the introduction opening (21) in the direction of the retaining opening (22) and forms a narrowed neck location (26, 426),
- wherein the chain pin (40) has at one end a pin head (41) with a pin neck (42) and has at the other end a pin foot (43),
- wherein a diameter (D21) of the introduction opening (21) is larger than a diameter (D41) of the pin head (41), and a diameter (D22) of the retaining opening (22) is smaller than the diameter (D41) of the pin head (41) and larger than a diameter (D42) of the pin neck (42),
- wherein the narrowed neck location (26, 426) is dimensioned to be smaller than the diameter (D42) of the pin neck (42), and
- a clamping region (27, 427) is arranged between the narrowed neck location (26, 426) and the retaining opening (22) of the slot (20, 420) and is dimensioned to be smaller than the diameter (D42) of the pin neck (42),
**characterized**
**in that** the closing plate (10, 410, 510) has an asymmetrical form with respect to the longitudinal axis (V) thereof, and the connecting region (15, 415) of the closing plate (10, 410, 510) has a concave peripheral region (14) and a non-concave peripheral region, wherein the non-concave peripheral region is in the form of a rectilinear edge region (17).

2. Chain-closing link (5) according to Claim 1, **characterized**
**in that** the clamping region (27, 427) is formed by two clamping slopes (27a, 27b, 427a, 427b) which are located opposite one another and run in a non-parallel state in relation to one another.

3. Chain-closing link (5) according to Claim 1 or 2, **characterized**
**in that** the slot (20) has in its displacement region a ramp (30), along which the pin head (41) slides by way of its underside when the chain-closing link (5) is being assembled, wherein the ramp (30) slopes up in the direction of the retaining opening (22).

4. Chain-closing link (5) according to one of the preceding claims,
**characterized**
**in that** the displacement region narrows from the introduction opening (21) in the direction of the retaining opening (22) and forms a narrowed head location (24, 424), which is dimensioned to be smaller than the diameter (D41) of the pin head (41).

5. Chain-closing link (5) according to one of the preceding claims,
**characterized**
**in that** a longitudinal axis (L) of the slot (20, 420) runs obliquely in relation to the longitudinal axis (V) of the closing plate.

6. Chain-closing link (5) according to Claim 5, **characterized**
**in that** the longitudinal axis (L) of the slot runs at an angle of from 5 degrees to 25 degrees, in particular of 15 degrees, in relation to the longitudinal axis (V) of the closing plate.

7. Chain-closing link (5) according to one of the preceding claims,
**characterized**
**in that** the connecting region (15, 415) of the closing plate (10, 410) has a recess (15a, 415a).

8. Chain-closing link (5) according to Claim 7, **characterized**
**in that**, in the direction of the longitudinal axis (V) of the closing plate, the recess (415a) is dimensioned to be smaller in the region of the rectilinear peripheral region (17) than in the region of the concave peripheral region (14).

9. Chain-closing link (5) for a bicycle chain (1), comprising two closing parts each with a closing plate (10, 410, 510) and a chain pin (40) connected in a rotationally fixed manner to the closing plate (10, 410, 510),
- wherein the closing plate (10, 410, 510) has a first end region (11), a second end region (12) and a connecting region (15, 415) between the two end regions (11, 12), and
- the connecting region (15, 415) of the closing plate (10, 410, 510) has a concave peripheral region (14) and a non-concave peripheral region (17),
- and, furthermore, a slot (20, 420), comprising an introduction opening (21), a retaining opening (22) and a displacement region located between the introduction opening (21) and the retaining opening (22), is arranged in the first end region (11) of the closing plate (10, 410, 510),
wherein the displacement region narrows from the introduction opening (21) in the direction of the retaining opening (22) and forms a narrowed head location (24, 424) and/or narrowed neck location (26, 426),
- wherein the chain pin (40) has at one end a pin head (41) with a pin neck (42) and has at the other end a pin foot (43),
- wherein a diameter (D21) of the introduction opening (21) is larger than a diameter (D41) of the pin head (41), and
a diameter (D22) of the retaining opening (22) is smaller than the diameter (D41) of the pin head (41) and larger than a diameter (D42) of the pin neck (42), and
the narrowed head location (24, 424) is dimensioned to be smaller than the diameter (D41) of the pin head (41) and/or the narrowed neck location (26, 426) is dimensioned to be smaller than the diameter (D42) of the pin neck (42),
- wherein the connecting region (15, 415) of the closing plate (10, 410, 510) has a recess (15a, 415a),
**characterized**
**in that** the non-concave peripheral region is in the form of a rectilinear peripheral region (17).

10. Chain-closing link (5) according to Claim 9, **characterized**
**in that** a longitudinal axis (L) of the slot (20, 420) runs obliquely in relation to the longitudinal axis (V) of the closing plate.

11. Chain-closing link (5) according to Claim 10, **characterized**
**in that** the longitudinal axis (L) of the slot runs at an angle of from 5 degrees to 25 degrees, in particular of 15 degrees, in relation to the longitudinal axis (V) of the closing plate.

12. Chain-closing link (5) according to one of Claims 9 to 11,
**characterized**
**in that** a clamping region is arranged between the narrowed head location (24, 424) and the retaining opening (22) of the slot and is dimensioned to be smaller than the diameter (D41) of the pin head (41) and/or a clamping region (27, 427) is arranged between the narrowed neck location (26, 426) and the retaining opening (22) of the slot and is dimensioned to be smaller than the diameter (D42) of the pin neck (42).

13. Chain-closing link (5) according to Claim 12, **characterized**
**in that** the clamping region (27, 427) is formed by two clamping slopes (27a, 27b, 427a, 427b) which are located opposite one another and run in a non-parallel state in relation to one another.

14. Chain-closing link (5) according to Claims 9 to 13, **characterized**
**in that** the slot (20) has in its displacement region a ramp (30), along which the pin head (41) slides by way of its underside when the chain-closing link (5) is being assembled, wherein the ramp (30) slopes up in the direction of the retaining opening (22).

15. Chain-closing link (5) according to Claim 14, **characterized**
**in that**, in the direction of the longitudinal axis (V) of the closing plate, the recess (415a) is dimensioned to be smaller in the region of the rectilinear peripheral region (17) than in the region of the concave peripheral region (14).

## Revendications

1. Maillon de fermeture de chaîne (5) pour une chaîne de bicyclette (1) constitué de deux parties de fermeture munies respectivement d'une plaque de fermeture (10, 410, 510) et d'un boulon de chaîne (40) relié de manière immobile en rotation avec la plaque de fermeture (10, 410, 510),
- la plaque de fermeture (10, 410, 510) comprenant une première région d'extrémité (11), une deuxième région d'extrémité (12) et une région de liaison (15, 415) entre les deux régions d'extrémité (11, 12),
- et en outre un trou oblong (20, 420), comprenant une ouverture d'insertion (21), une ouverture de retenue (22) et une région de coulissement située entre l'ouverture d'insertion (21) et l'ouverture de retenue (22), étant agencé dans la première région d'extrémité (11) de la plaque de fermeture (10, 410, 510),
la région de coulissement se rétrécissant depuis l'ouverture d'insertion (21) jusqu'à l'ouverture de retenue (22) et formant un étranglement de col (26, 426),
- le boulon de chaîne (40) comprenant à une extrémité une tête de boulon (41) munie d'un col de boulon (42) et à l'autre extrémité un pied de boulon (43),
- un diamètre (D21) de l'ouverture d'insertion (21) étant supérieur à un diamètre (D41) de la tête de boulon (41), et un diamètre (D22) de l'ouverture de retenue (22) étant inférieur au diamètre (D41) de la tête de boulon (41), ainsi que supérieur à un diamètre (D42) du col de boulon (42),
- l'étranglement de col (26, 426) étant dimensionné inférieur au diamètre (D42) du col de boulon (42), et
- une région de serrage (27, 427) étant agencée entre l'étranglement de col (26, 426) et l'ouverture de retenue (22) du trou oblong (20, 420), qui est dimensionnée inférieure au diamètre (D42) du col de boulon (42),
**caractérisé en ce que**
la plaque de fermeture (10, 410, 510) est configurée sous forme asymétrique au regard de son axe longitudinal (V), et la région de liaison (15, 415) de la plaque de fermeture (10, 410, 510) comprend une région de bord concave (14) et une région de bord non concave,
la région de bord non concave étant configurée en tant que région de bord droite (17).

2. Maillon de fermeture de chaîne (5) selon la revendication 1,
**caractérisé en ce que**
la région de serrage (27, 427) est formée par deux biais de serrage (27a, 27b, 427a, 427b) en vis-à-vis et non parallèles l'un à l'autre.

3. Maillon de fermeture de chaîne (5) selon la revendication 1 ou 2,
**caractérisé en ce que**
le trou oblong (20) comprend une rampe (30) dans sa région de coulissement, le long de laquelle la tête de boulon (41) glisse avec son côté inférieur lors du montage du maillon de fermeture de chaîne (5), la rampe (30) montant dans la direction de l'ouverture de retenue (22).

4. Maillon de fermeture de chaîne (5) selon l'une quelconque des revendications précédentes,
**caractérisé en ce que**
la région de coulissement se rétrécit depuis l'ouverture d'insertion (21) jusqu'à l'ouverture de retenue (22) et forme un étranglement de tête (24, 424), qui est dimensionné inférieur au diamètre (D41) de la tête de boulon (41).

5. Maillon de fermeture de chaîne (5) selon l'une quelconque des revendications précédentes,
**caractérisé en ce que**
un axe longitudinal (L) du trou oblong (20, 420) s'étend en biais par rapport à l'axe longitudinal de plaque de fermeture (V).

6. Maillon de fermeture de chaîne (5) selon la revendication 5,
**caractérisé en ce que**
l'axe longitudinal de trou oblong (L) s'étend dans une région d'angle allant de 5 degrés à 25 degrés, notamment de 15 degrés, par rapport à l'axe longitudinal de plaque de fermeture (V).

7. Maillon de fermeture de chaîne (5) selon l'une quelconque des revendications précédentes,
**caractérisé en ce que**
la région de liaison (15, 415) de la plaque de fermeture (10, 410) comprend un évidement (15a, 415a).

8. Maillon de fermeture de chaîne (5) selon la revendication 7,
**caractérisé en ce que**
l'évidement (415a) est dimensionné dans la direction de l'axe longitudinal de plaque de fermeture (V) dans la région de la région de bord droite (17) inférieur à dans la région de la région de bord concave (14).

9. Maillon de fermeture de chaîne (5) pour une chaîne de bicyclette (1), constitué de deux parties de fermeture munies respectivement d'une plaque de fermeture (10, 410, 510) et d'un boulon de chaîne (40) relié de manière immobile en rotation avec la plaque de fermeture (10, 410, 510),
- la plaque de fermeture (10, 410, 510) comprenant une première région d'extrémité (11), une deuxième région d'extrémité (12) et une région de liaison (15, 415) entre les deux régions d'extrémité (11, 12), et
- la zone de liaison (15, 415) de la plaque de fermeture (10, 410, 510) comprenant une région de bord concave (14) et une région de bord non concave (17),
- et en outre un trou oblong (20, 420), comprenant une ouverture d'insertion (21), une ouverture de retenue (22) et une région de coulissement située entre l'ouverture d'insertion (21) et l'ouverture de retenue (22), étant agencé dans la première région d'extrémité (11) de la plaque de fermeture (10, 410, 510),
la région de coulissement se rétrécissant depuis l'ouverture d'insertion (21) jusqu'à l'ouverture de retenue (22) et formant un étranglement de tête (24, 424) et/ou un étranglement de col (26, 426),
- le boulon de chaîne (40) comprenant à une extrémité une tête de boulon (41) munie d'un col de boulon (42) et à l'autre extrémité un pied de boulon (43),
- un diamètre (D21) de l'ouverture d'insertion (21) étant supérieur à un diamètre (D41) de la tête de boulon (41), et
un diamètre (D22) de l'ouverture de retenue (22) étant inférieur au diamètre (D41) de la tête de boulon (41), ainsi que supérieur à un diamètre (D42) du col de boulon (42), et
l'étranglement de tête (24, 424) étant dimensionné inférieur au diamètre (D41) de la tête de boulon (41) et/ou l'étranglement de col (26, 426) étant dimensionné inférieur au diamètre (D42) du col de boulon (42),
- la région de liaison (15, 415) de la plaque de fermeture (10, 410, 510) comprenant un évidement (15a, 415a),
**caractérisé en ce que**
la région de bord non concave est configurée en tant que région de bord droite (17).

10. Maillon de fermeture de chaîne (5) selon la revendication 9,
**caractérisé en ce que**
un axe longitudinal de trou oblong (L) du trou oblong (20, 420) s'étend en biais par rapport à l'axe longitudinal de plaque de fermeture (V).

11. Maillon de fermeture de chaîne (5) selon la revendication 10,
**caractérisé en ce que**
l'axe longitudinal de trou oblong (L) s'étend dans une région d'angle allant de 5 degrés à 25 degrés, notamment de 15 degrés, par rapport à l'axe longitudinal de plaque de fermeture (V).

12. Maillon de fermeture de chaîne (5) selon l'une quelconque des revendications 9 à 11,
**caractérisé en ce que**
une zone de serrage est agencée entre l'étranglement de tête (24, 424) et l'ouverture de retenue (22) du trou oblong, qui est dimensionnée inférieure au diamètre (D41) de la tête de boulon (41) et/ou une zone de serrage (27, 427) est agencée entre l'étranglement de col (26, 426) et l'ouverture de retenue (22) du trou oblong, qui est dimensionnée inférieure au diamètre (D42) du col de boulon (42).

13. Maillon de fermeture de chaîne (5) selon la revendication 12,
**caractérisé en ce que**
la zone de serrage (27, 427) est formée par deux biais de serrage (27a, 27b, 427a, 427b) en vis-à-vis et non parallèles l'un à l'autre.

14. Maillon de fermeture de chaîne (5) selon les revendications 9 à 13,
**caractérisé en ce que**
le trou oblong (20) comprend une rampe (30) dans sa région de coulissement, le long de laquelle la tête de boulon (41) glisse avec son côté inférieur lors du montage du maillon de fermeture de chaîne (5), la rampe (30) montant dans la direction de l'ouverture de retenue (22).

15. Maillon de fermeture de chaîne (5) selon la revendication 14,
**caractérisé en ce que**
l'évidement (415a) est dimensionné dans la direction de l'axe longitudinal de plaque de fermeture (V) dans la région de la région de bord droite (17) inférieur à dans la région de la région de bord concave (14).
